(19) Europäisches Patentamt / European Patent Office / Office européen des brevets

(11) **EP 4 278 654 B1**

(12) **EUROPEAN PATENT SPECIFICATION**

(45) Date of publication and mention
of the grant of the patent:
**19.02.2025  Bulletin 2025/08**

(21) Application number: **21836488.3**

(22) Date of filing: **13.12.2021**

(51) International Patent Classification (IPC):
**H04W 24/08** *(2009.01)*     **H04W 74/0833** *(2024.01)*

(52) Cooperative Patent Classification (CPC):
**H04W 24/08; H04W 74/0833; H04W 74/0836;**
**H04W 74/0838**

(86) International application number:
**PCT/EP2021/085433**

(87) International publication number:
**WO 2022/152483 (21.07.2022 Gazette 2022/29)**

(54) **RANDOM ACCESS PROCEDURE LOGGING AND REPORTING FOR WIRELESS NETWORKS**

DIREKTZUGRIFFSPROZEDURPROTOKOLLIERUNG UND -MELDUNG FÜR DRAHTLOSE
NETZWERKE

ENREGISTREMENT ET RAPPORT DE PROCÉDURE D'ACCÈS ALÉATOIRE POUR RÉSEAUX
SANS FIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.01.2021   US 202163199659 P**

(43) Date of publication of application:
**22.11.2023   Bulletin 2023/47**

(73) Proprietor: **Nokia Technologies Oy
02610 Espoo (FI)**

(72) Inventors:
• **PANTELIDOU, Anna
91300 Massy (FR)**
• **FREDERIKSEN, Frank
9270 Klarup (DK)**

(74) Representative: **Mudge, Kevin
Bryers Intellectual Property Ltd
Bristol & Bath Science Park
Dirac Crescent
Emersons Green
Bristol BS16 7FR (GB)**

(56) References cited:
• ZTE CORPORATION ET AL: "Enhanced UE reporting for 2step RA", vol. RAN WG2, no. Electronic meeting; 20201102 - 20201113, 23 October 2020 (2020-10-23), XP051943002, Retrieved from the Internet <URL:https://ftp.3gpp.org/tsg_ran/WG2_RL2/TSGR2_112-e/Docs/R2-2010322.zip R2-2010322 Enhance UE reporting for 2stepRA.doc> [retrieved on 20201023]
• HUAWEI ET AL: "Discussion on Log of Idle Mode Measurement", vol. RAN WG2, no. Busan, KOREA; 20180521 - 20180525, 11 May 2018 (2018-05-11), XP051519739, Retrieved from the Internet <URL:http://www.3gpp.org/ftp/tsg%5Fran/WG2%5FRL2/TSGR2%5F102/Docs/R2%2D1808342%2Ezip> [retrieved on 20180511]
• NOKIA ET AL: "2-step RACH Reporting", vol. RAN WG2, no. Electronic; 20201102 - 20201113, 22 October 2020 (2020-10-22), XP051942380, Retrieved from the Internet <URL:https://ftp.3gpp.org/tsg_ran/WG2_RL2/TSGR2_112-e/Docs/R2-2009425.zip R2-2009425 2-step RACH Optimization.docx> [retrieved on 20201022]

## Description

### TECHNICAL FIELD

This description relates to wireless communications.

### BACKGROUND

A communication system may be a facility that enables communication between two or more nodes or devices, such as fixed or mobile communication devices. Signals can be carried on wired or wireless carriers.

An example of a cellular communication system is an architecture that is being standardized by the 3rd Generation Partnership Project (3GPP). A recent development in this field is often referred to as the long-term evolution (LTE) of the Universal Mobile Telecommunications System (UMTS) radio-access technology. E-UTRA (evolved UMTS Terrestrial Radio Access) is the air interface of 3GPP's Long Term Evolution (LTE) upgrade path for mobile networks. In LTE, base stations or access points (APs), which are referred to as enhanced Node AP (eNBs), provide wireless access within a coverage area or cell. In LTE, mobile devices, or mobile stations are referred to as user equipments (UE). LTE has included a number of improvements or developments. Aspects of LTE are also continuing to improve.

5G New Radio (NR) development is part of a continued mobile broadband evolution process, similar to earlier evolution of 3G & 4G wireless networks. In addition, 5G is also targeted at the new emerging use cases in addition to mobile broadband. A goal of 5G is to provide significant improvement in wireless performance, which may include new levels of data rate, latency, reliability, and security. 5G NR may also scale to efficiently connect the massive Internet of Things (IoT) and may offer new types of mission-critical services. For example, ultra-reliable and low-latency communications (URLLC) devices may require high reliability and very low latency.

The document 3GPP R2-2010322: "Enhanced UE reporting for 2step RA", by ZTE Corporation et al., 3GPP TSG RAN WG#2112-e Electronic meeting, 2nd-13th November 2020, provides a discussion on random access report enhancement.

### SUMMARY

The invention is defined by the appended claims. As defined by claim 1, the invention provides an apparatus comprising: means for classifying random access procedures of the apparatus into either a first category of random access procedures that are initiated with a 2-step random access attempt, or a second category of random access procedures that are initiated with a 4-step random access attempt; means for receiving, from a network node, a random access report configuration indicating at least a quantity limitation for logging random access information in a random access report for random access procedures of at least one of the first category of random access procedures or the second category of random access procedures; and means for logging random access information in the random access report for one or more random access procedures of at least one of the first category or the second category, in accordance with the random access report configuration.

Preferred embodiments of the apparatus of claim 1 are defined by claims 2 to 11.

As defined by claim 12, the invention provides an apparatus comprising: means for transmitting, to a user equipment, a random access report configuration indicating one or more parameters of random access information to be logged by the user equipment in a random access report for at least one of a first category of random access procedures or a second category of random access procedures, wherein the first category of random access procedures are initiated with a 2-step random access attempt by the user equipment, and the second category of random access procedures are initiated with a 4-step random access attempt by the user equipment, wherein the random access report configuration also indicates at least a quantity limitation for logging, by the user equipment, of random access information in the random access report for random access procedures of at least one of the first category of random access procedures or the second category of random access procedures; and means for receiving, from the user equipment, a random access report based on the random access report configuration.

A preferred embodiment of the apparatus of claim 12 is defined by claim 13.

As defined by claim 14, the invention provides a method comprising: classifying, by a user equipment, random access procedures of the user equipment into either a first category of random access procedures that are initiated with a 2-step random access attempt, or a second category of random access procedures that are initiated with a 4-step random access attempt; receiving, by the user equipment from a network node, a random access report configuration indicating at least a quantity limitation for logging random access information in a random access report for random access procedures of at least one of the first category of random access procedures or the second category of random access procedures; and logging, by the user equipment, random access information in the random access report for one or more random access procedures of at least one of the first category or the second category, in accordance with the random access report configuration.

As defined by claim 15, the invention provides a method comprising: transmitting, by a network node to a user equipment, a random access report configuration indicating one or more parameters of random access information to be logged by the user equipment in a random access report for at least one of a first category of random access procedures or a second category of random access procedures, wherein the first category of random access procedures are initiated with a 2-step random access attempt by the user equipment, and the second category of random access procedures are initiated with a 4-step random access attempt by the user equipment, wherein the random access report configuration also indicates at least a quantity limitation for logging, by the user equipment, of random access information in the random access report for random access procedures of at least one of the first category of random access procedures or the second category of random access procedures; and receiving, by the network node from the user equipment, a random access report based on the random access report configuration.

BRIEF DESCRIPTION OF THE DRAWINGS

FIG. 1 is a block diagram of a wireless network according to an example embodiment.
FIG. 2 is a diagram illustrating a 4-step contention based random access (CBRA) procedure.
FIG. 3 is a diagram illustrating a 2-step random access (RACH) procedure according to an example embodiment.
FIG. 4 is a flow chart illustrating operation of a user equipment (UE) or user device according to an example embodiment.
FIG. 5 is a flow chart illustrating operation of a network node (e.g., gNB, DU, BS) according to an example embodiment.
FIG. 6 is a diagram illustrating different categories of random access (RACH) procedures according to example embodiments.
FIG. 7 is a diagram illustrating a random access report according to an example embodiment.
FIG. 8 is a diagram illustrating a random access report according to another example embodiment.
FIG. 9 is a flow chart illustrating operation of a system to log and report random access information according to an example embodiment.
FIG. 10 is a flow chart illustrating operation of a network node according to an example embodiment in which the network node sends a PUSCH scrambling sequence information to another network node.
FIG. 11 is a flow chart illustrating operation of a system in which a RAN node or network node may send a neighbour node a scrambling information or scrambling identity for a Msg A PUSCH transmission by a user equipment according to an example embodiment.
FIG. 12 is a block diagram of a wireless station (e.g., AP, BS, gNB, network node, user device, UE, or other wireless node) according to an example embodiment.

DETAILED DESCRIPTION

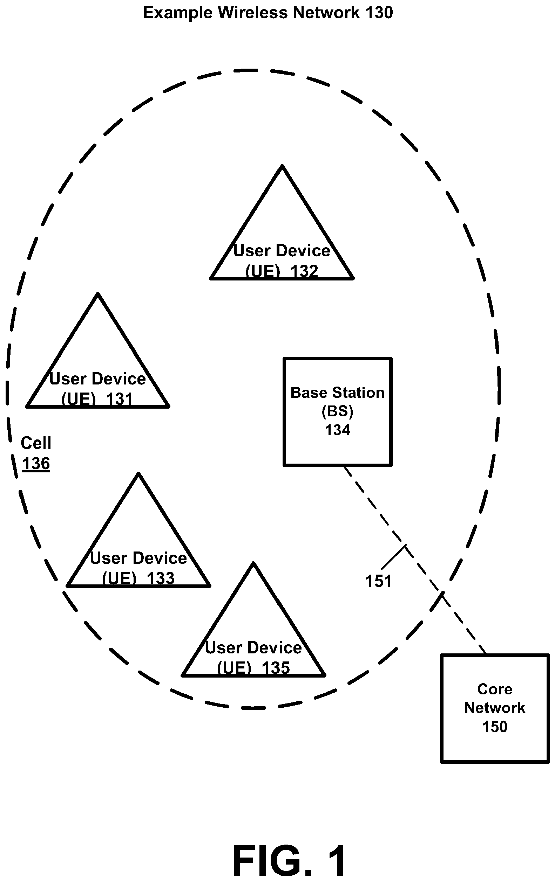

FIG. 1 is a block diagram of a wireless network 130 according to an example embodiment. In the wireless network 130 of FIG. 1, user devices 131, 132, 133 and 135, which may also be referred to as mobile stations (MSs) or user equipment (UEs), may be connected (and in communication) with a base station (BS) 134, which may also be referred to as an access point (AP), an enhanced Node B (eNB), or a next generation Node B (gNB). The terms user device and user equipment (UE) may be used interchangeably. A BS may also be referred to as a RAN (radio access network) or NG-RAN (next generation radio access network) node. At least part of the functionalities of a BS (e.g., AP, gNB, eNB, RAN node) may also be carried out by one or more network nodes, servers or hosts, such as a centralized unit (CU) and a distributed unit (DU) in a split RAN architecture, which may be operably coupled to a remote transceiver, such as a remote radio head (RRH). BS 134 provides wireless coverage within a cell 136, including to user devices 131, 132, 133 and 135. Although only four user devices are shown as being connected or attached to BS 134, any number of user devices may be provided. BS 134 is also connected to a core network 150 via a S1 interface 151. This is merely one simple example of a wireless network, and others may be used.

According to an illustrative example, a BS (e.g., AP, eNB, gNB, RAN node) may be part of a mobile telecommunication system. A RAN may include one or more RAN nodes (e.g., AP, BSs, eNBs, gNBs) that implement a radio access technology, e.g., to allow one or more UEs to have access to a network or core network. Thus, the RAN nodes reside between one or more user devices or UEs and a core network. According to an example embodiment, each RAN node may provide one or more wireless communication services for one or more UEs or user devices, e.g., to allow the UEs to have wireless access to a network, via the RAN node. Each RAN node may perform or provide wireless communication services, e.g., such as allowing UEs or user devices to establish a wireless connection to the RAN node, and sending data to and/or receiving data from one or more of the UEs. For example, after establishing a connection to a UE, a RAN node may forward data to the UE that is received from a network or the core network, and/or forward data received from the UE to the network or core network. RAN nodes may perform a wide variety of other wireless functions or services, e.g., such as broadcasting control information (e.g., such as system information) to UEs, paging UEs when there is data to be delivered to the UE, assisting in handover of a UE between cells, scheduling of resources for uplink data transmission from the UE(s) and downlink data transmission to UE(s), sending control information to configure one or more UEs, and the like. These are a few examples of one or more functions that a RAN node may perform.

A user device (user terminal, user equipment (UE), mobile terminal, handheld wireless device, etc.) may refer to a portable computing device that includes wireless mobile communication devices operating either with or without a subscriber identification module (SIM), including, but not limited to, the following types of devices: a mobile station (MS), a mobile phone, a cell phone, a smartphone, a personal digital assistant (PDA), a handset, a device using a wireless modem (alarm or measurement device, etc.), a laptop and/or touch screen computer, a tablet, a phablet, a game console, a notebook, a vehicle, a sensor, a wearable device, as examples, or any other wireless device. It should be appreciated that a user device may also be (or may include) a nearly exclusive uplink only device, of which an example is a camera or video camera loading images or video clips to a network.

Core network 150 may include a mobility management entity (MME) or an access and mobility management function (AMF), which may control access to the network, and handle or assist with mobility/handover of user devices between BSs, one or more gateways that may forward data between the BSs and a packet data network or the Internet, and other control nodes, functions or blocks.

In addition, by way of illustrative example, the various example embodiments or techniques described herein may be applied to various types of user devices or data service types, or may apply to user devices that may have multiple applications running thereon that may be of different data service types. New Radio (5G) development may support a number of different applications or a number of different data service types, such as for example: machine type communications (MTC), enhanced machine type communication (eMTC), Internet of Things (IoT), and/or narrowband IoT user devices, enhanced mobile broadband (eMBB), and ultra-reliable and low-latency communications (URLLC). Many of these new 5G (NR) - related applications may require generally higher performance than previous wireless networks.

IoT may refer to an ever-growing group of objects that may have Internet or network connectivity, so that these objects may send information to and receive information from other network devices. For example, many sensor type applications or devices may monitor a physical condition or a status, and may send a report to a server or other network device, e.g., when an event occurs. Machine Type Communications (MTC, or Machine to Machine communications) may, for example, be characterized by fully automatic data generation, exchange, processing and actuation among intelligent machines, with or without intervention of humans. Enhanced mobile broadband (eMBB) may support much higher data rates than currently available in LTE.

Ultra-reliable and low-latency communications (URLLC) is a new data service type, or new usage scenario, which may be supported for New Radio (5G) systems. This enables emerging new applications and services, such as industrial automations, autonomous driving, vehicular safety, e-health services, and so on. 3GPP targets in providing connectivity with reliability corresponding to block error rate (BLER) of 10-5 and up to 1 ms U-Plane (user/data plane) latency, by way of illustrative example. Thus, for example, URLLC user devices/UEs may require a significantly lower block error rate than other types of user devices/UEs as well as low latency (with or without requirement for simultaneous high reliability). Thus, for example, a URLLC UE (or URLLC application on a UE) may require much shorter latency, as compared to a eMBB UE (or an eMBB application running on a UE).

The various example embodiments may be applied to a wide variety of wireless technologies or wireless networks, such as LTE, LTE-A, 5G/New Radio (NR), or any other wireless network or wireless technology operating on cmWave and/or mmWave bands, and to a wide variety of communication services, such as IoT, MTC, eMTC, eMBB, URLLC, etc. These example networks, technologies or data service types are provided only as illustrative examples.

According to an example embodiment, a random access channel (RACH) procedure or random access procedure may be performed by a UE or user device for a variety of reasons (or triggers). For example, a UE may use a random access procedure to establish a connection with a network node (e.g., BS, AP, eNB, gNB). Random access procedures may have the possibility of failure, e.g., due to collisions or other reasons. A random access procedure may be contention based (a contention based random access (CBRA) procedure) or contention free (a contention free random access (CFRA) procedure). In addition, there are two types of random access procedures, namely a 4-step random access procedure, and a 2-step random access procedure.

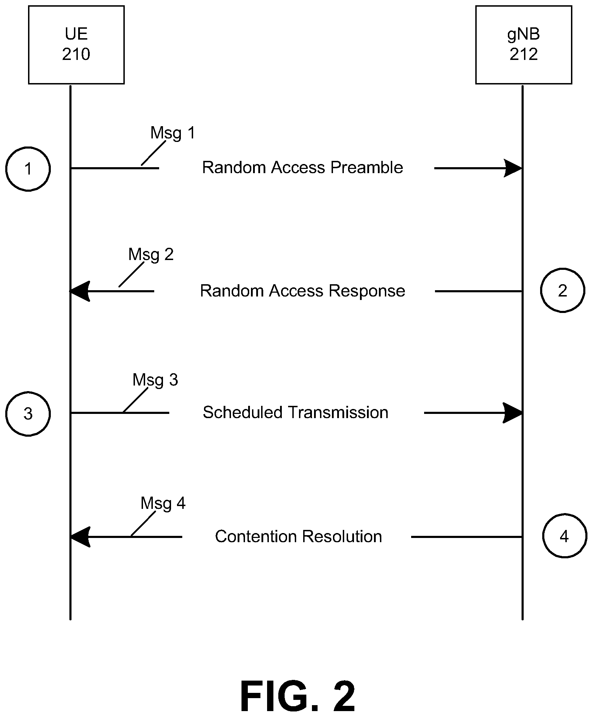

FIG. 2 is a diagram illustrating a 4-step contention based random access (CBRA) procedure between a UE 210 and a gNB 212. In a 4-step CBRA procedure, the UE 210 starts the random access procedure at step 1 by sending a random access preamble (message 1 or Msg 1) to the gNB 212. There may be different groups of RACH preambles defined, depending on the size of the first scheduled uplink transmission from the UE 210 and on the UE's channel conditions. The UE 210 may obtain information on how to access the network from system information block 1 (SIB1), which are part of the system information (SI) that is transmitted (e.g., broadcasted or signalled) by the gNB 212. The RACH preamble may be designed for relatively low complexity and high robustness (and thus, enhanced likelihood of reception by the gNB 212) despite a lack of accurate timing control. If the gNB 212 receives the random access preamble successfully, the gNB 212 responds at step 2 with a Random Access Response (RAR or message 2 or Msg 2). The RAR may include a random access preamble identifier (RAPID) that identifies the received RACH preamble, an uplink timing advance (TA) for the UE 210 (e.g., calculated by the gNB 212 based on the received RACH preamble from the UE 210), a temporary identity, e.g., such as a cell-radio network temporary identifier (C-RNTI), assigned to the UE 210, and an uplink (UL) grant indicating physical uplink shared channel (PUSCH) resources to be used for UE 210's subsequent transmission. At step 3, upon receiving the RAR, the UE 210 is able to send a scheduled transmission to the gNB 212 (message 3 or Msg 3) via the scheduled PUSCH resources indicated in the UL grant of the RAR. At step 4, if the gNB 212 receives the scheduled transmission via PUSCH , the gNB 212 sends a contention resolution message (message 4 or Msg 4) to indicate whether the scheduled transmission by the UE 210 was successful and to ensure that the UE 210 does not incorrectly use another UE's identity.

A 2-step random access (e.g., CBRA) procedure was introduced to reduce the number of round-trip transmissions between the UE and the gNB (and thus reduce the amount of latency) until the RACH procedure is successful, namely from 2 round-trip transmissions to 1 round trip transmission. The 2-step random access procedure reduces the number of round-trip transmissions by combining both message 1 and message 3 (Msg 1 and Msg 3) of the 4-step random access procedure into a new message called message A or Msg A, and by further combining both message 2 and message 4 (Msg 2 and Msg 4) of the 4-step random access procedure into a new message called message B or Msg B. Due to its property of minimizing RACH channel occupancy until successful RACH access, 2-step RACH procedure has been considered for unlicensed access, since this procedure may reduce the amount of Listen Before Talk (LBT) attempts, and thereby increase the probability of successfully completing the RACH procedure. However, there may be a higher likelihood of failure for a 2-step random access procedure as compared to a 4-step random access procedure.

In addition to 2-step and 4-step contention based random access (CBRA) procedures, 2-step and 4-step contention free random access (CFRA) procedures may also be supported. For example, for the 4-step CFRA procedure, the gNB may first provide the UE with a random access preamble assignment for Msg 1 transmission. For the 2-step CFRA procedure, the gNB may provide the UE with both a random access preamble assignment and PUSCH assignment (UL grant that identifies PUSCH resources for UE uplink transmission) for MsgA transmission.

In addition, Msg A PUSCH transmissions can be scrambled using an identity, such as a physical cell identity (PCI), or one of the transmitted scrambling identity values (e.g., one of dataScramblingIdentityPUSCH or msgA-dataScramblingIndex) that may be transmitted (e.g., broadcasted or signalled) by the gNB.

Specifically, PUSCH transmissions are scrambled using a scrambling sequence generator that is initialized by the value cinit. This value cinit may be calculated based, at least in part, on a scrambling identity (scrambling ID) (nID), and other values, as follows:

$$c_{\text{init}} = \begin{cases} n_{\text{RNTI}} \cdot 2^{16} + n_{\text{RAPID}} \cdot 2^{10} + n_{\text{ID}} \\ n_{\text{RNTI}} \cdot 2^{15} + n_{\text{ID}} \end{cases}$$

for msgA on PUSCH otherwise
Where:

- $n_{\text{ID}} \in \{0,1,...,1023\}$ equals the higher-layer parameter *dataScramblingIdentityPUSCH* if configured and the RNTI (radio network temporary identifier) equals one of several RNTIs, such as one of the C-RNTI, MCS-C-RNTI, SP-CSI-RNTI or CS-RNTI, and the transmission is not scheduled using DCI (downlink control information) format 0_0 in a common search space; or
- $n_{\text{ID}} \in \{0,1,...,1023\}$ equals the higher-layer parameter *msgA-dataScramblingIndex* if configured and the PUSCH transmission is triggered by a Type-2 random access procedure as described in clause 8.1A of [5, TS 38.213]; or otherwise

And otherwise $n_{\text{ID}} = N_{\text{ID}}^{\text{cell}}$ (in this case, $n_{\text{ID}}$ is set to the cell identity, such as a physical cell identity (PCI)).

- $n_{\text{RAPID}}$ is the index of the random-access preamble transmitted for Msg A as described in clause 5.1.3A of [11, TS 38.321].
- $n_{\text{RNTI}}$ equals the RA-RNTI (random access radio network temporary identity) for Msg A, and otherwise corresponds to the RNTI associated with the PUSCH transmission.

In LTE, PUSCH scrambling sequence is only based on the physical cell identity (PCI) of the cell to which the UE is transmitting. However, in NR (5G), the PUSCH scrambling may be based on either a cell identity (PCI), or if configured, based on a configured and/or transmitted (e.g., broadcast or signalled) identity value (e.g., either *msgA-dataScramblingIndex, or dataScramblingIdentityPUSCH*, as examples). While there is greater flexibility in the method (or basis) for scrambling the PUSCH transmission, there can be a conflict if the method for initializing the scrambling sequence generator in Msg A PUSCH transmissions is at some point configured; a neighbouring gNB cannot determine what was the method used for the scrambling, namely whether PCI or *msgA-DataScramblingIndex* was used. This can lead to collisions among UEs that share common time and frequency resources. A collision may typically happen when the same physical resources (in time and frequency) are used by different UEs belonging to different cells. In case of such UEs using different scrambling in different cells, the network nodes or gNBs will be able to detect UEs from within own cell (thus, no conflict at a receiving gNB). If UEs from different cells are using the same scrambling (e.g., using a same scrambling sequence, or based on same scrambling identity value) while having a collision, destructive interference will happen at the receiving gNB, and the gNB's ability to correctly decode the received data (MsgA PUSCH) will be greatly reduced.

Currently, the network node (e.g., BS, AP, eNB, gNB) cannot know or determine a reason for a fallback or switching from 2-step RACH procedure to 4-step RACH procedure, e.g., whether it was due to low or insufficient transmission power, whether there was a preamble collision with another UE, or whether there was a Msg A PUSCH collision based on a same identity (a same cell identity (e.g., PCI) or a same transmitted or broadcasted scrambling identity) used for scrambling the PUSCH transmission.

Therefore, according to an example embodiment, additional control and information in RACH reporting may allow the network node (e.g., BS, AP, eNB, gNB) to better determine one or more causes or reasons for a fallback or switching from 2-step to 4-step RACH procedure by a UE, to possibly reduce such fallback or switching from 2-step to 4-step RACH procedures. Also, according to an example embodiment, reporting of a scrambling sequence information (e.g., indicating an identity, or type of identity (e.g., PCI or a transmitted scrambling identity) used for PUSCH scrambling) and/or improved coordination among network nodes as to an identity (e.g., either cell identity or transmitted scrambling identity) used for scrambling of PUSCH transmissions may, at least in some cases, reduce PUSCH collisions.

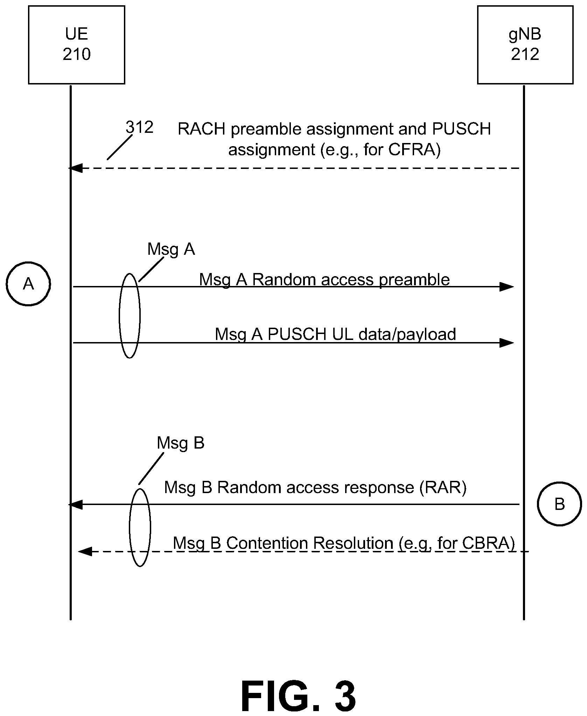

FIG. 3 is a diagram illustrating a 2-step random access (RACH) procedure according to an example embodiment. If the 2-step RACH procedure is a contention free RACH (CFRA) procedure, at 312, the gNB 212 may send or provide the UE 210 with a RACH preamble assignment and a PUSCH (physical uplink shared channel) assignment, which may be used by the UE 210 for Msg A transmission. The UE 210 may transmit Msg A, including a random access preamble and a PUSCH transmission (data, RRC message, or other UL transmission via PUSCH resources). After the gNB 212 successfully receives (decodes) both the random access preamble and the PUSCH transmission of Msg A, the gNB 212 may respond by transmitting Msg B to the UE 210. As shown in FIG. 3, Msg B may include a random access response (RAR). Also, if the 2- step RACH procedure is contention based random access (CBRA) procedure, Msg B may also include a contention resolution message. As described hereinbelow, if the gNB 212 receives (decodes) Msg A random access preamble, but is unable to receive (unable to decode) Msg A PUSCH transmission, the gNB 212 may transmit a fallbackRAR to the UE 210, which may cause the UE 210 to fall back to a 4-step RACH procedure.

In some cases, a 2-step random access (RACH) procedure may fail. Two situations may arise that may cause the UE to change or revert from a failed 2-step RACH procedure to a (e.g., more robust) 4-step RACH procedure. For a 2-step RACH procedure, as part of Msg A, the UE transmits both a random access preamble, and a PUSCH transmission via PUSCH resources. For example, the PUSCH transmission may include a RRC message, such as a RRC connection setup request, a RRC resume request, a RRC setup complete message, or other message or data. In some cases, the random access preamble and the PUSCH transmission may have different error probabilities at the gNB. For example, as part of Msg A transmission of a 2-step RACH procedure, receipt of the random access preamble may be relatively robust (more likely to be received successfully at gNB), as compared to the PUSCH transmission, which may be more error prone. Therefore, there may be situations in which a gNB can successfully receive a random access preamble (as part of the Msg A), but cannot receive (decode) the Msg A PUSCH transmission.

There may be (e.g., at least) two ways that an error may be detected for a 2-step RACH, including: 1) the UE may switch from a 2-step RACH procedure to a 4-step RACH procedure if a maximum number of Msg A transmission attempts have been performed by the UE without receiving a Msg B; and 2) the UE may fall back from a 2-step RACH procedure to a 4-step RACH procedure if the UE receives a fall back random access response (fallbackRAR) from the gNB, which may be transmitted by the gNB if the gNB is able to successfully receive decode a random access preamble of Msg A, but is unable to successfully receive or decode the PUSCH transmission (i.e., UL data payload) of Msg A.

Msg 3 UL transmission (e.g., UL data or RRC message) of 4-step RACH procedure may include the same content as PUSCH transmission included in Msg A of 2-step RACH procedure, but the physical resources used for the UL PUSCH transmission for 2-step vs. 4-step RACH procedures may be different. For example, PUSCH transmission in Msg A of 2-step RACH procedure may be sent using contention based resources (CBRA), or may be sent using contention free (CFRA) resources; whereas PUSCH transmission in Msg 3 of 4-step RACH procedure may be sent using configured/dedicated/allocated time-frequency resources indicated by the UL grant provided in Msg 2 (in case a FallbackRAR is sent, it contains TA and UL grant, allowing the UE to transmit Msg 3). If the gNB receives the RACH preamble in Msg A, but cannot detect the PUSCH transmission in Msg A, then the gNB sends a fallbackRAR to the UE. The UE will then fall back to 4-step RACH procedure. There is no need for the UE to send Msg 1 upon reception of a fallbackRAR as the network has already received the RACH preamble, so the UE can start the 4-step RACH procedure with Msg 3 transmission directly.

With respect to the UE switching from a 2-step RACH procedure to a 4-step RACH procedure, after the UE transmits Msg A (in 2-step RACH), the UE starts msgB-ResponseWindow timer, which is the maximum allowed time (after transmission of Msg A) for the UE to receive Msg B (with or without contention resolution message) from the gNB. As noted, Msg 1 (random access preamble) and Msg 3 (PUSCH transmission) of 4-step RACH procedure are combined into Msg A of the 2-step RACH procedure; and Msg 2 and Msg 4 of 4-step RACH procedure are combined into Msg B of 2-step RACH procedure. After expiration of msgB-Response-Window timer (without receiving Msg B), the UE will retransmit Msg A over another RACH occasion (a slot and/or set of symbols within the slot, and/or associated frequency resources that are configured by the network and which may be provided to UE). The UE may repeat retransmitting Msg A (e.g., via different set of resources or different RACH occasion), if the UE has not received Msg B before msgB-ResponseWindow timer has expired. If the UE reaches a maximum number of 2-step RACH attempts (e.g., UE has transmitted a maximum number of Msg A for a 2-step RACH procedure), without receiving Msg B, then the UE may switch to a 4-step RACH procedure, which may be more robust than the 2-step RACH procedure.

Also, as noted, the UE may fall back from a 2-step RACH procedure to a 4-step procedure if the UE receives a fall back RAR (fallbackRAR) from the gNB. As noted, in some cases, the gNB may be able to detect or decode the random access preamble of Msg A in the RACH channel, but may be unable to detect or decode the PUSCH (e.g., data) transmission of Msg A. In such case (which is a Msg A transmission error), the gNB may send a fallbackRAR (fall back random access response) to the UE, which causes the UE to fall back to a 4-step RACH procedure, based on the failed 2-step RACH procedure (e.g., based on the failed Msg A transmission of the 2-step RACH procedure, since the PUSCH transmission of Msg A was not successfully received by the gNB).

Therefore, overall, the UE may continue attempting to transmit (or retransmit) Msg A (as part of a 2-step RACH procedure) to the gNB until one of the following occurs: 1) UE receives Msg B, 2) UE reaches the maximum number of Msg A transmission attempts, or 3) UE receives a fallbackRAR from the gNB (where fallbackRAR indicates that the gNB received (decoded) the random access preamble from UE, but did not successfully receive PUSCH transmission of Msg A, and this fallbackRAR may include a TA and UL grant for UE's transmission of Msg 3 in 4-step RACH procedure). In case, 1), receiving Msg B within the 2-step RACH procedure indicates a successful RACH procedure, and the UE may then become connected to the cell or gNB. In case 2) (UE reaches a maximum number of Msg A transmissions), the UE may then switch from 2-step RACH procedure to a 4-step RACH procedure, and may transmit a random access preamble (Msg 1) of the 4-step RACH procedure. In case 3) (where UE receives a fallbackRAR from gNB), the UE will fall back from the 2-step RACH procedure to a more robust 4-step RACH procedure, and may skip Msg 1 (transmission of random access preamble), since UE receiving a fallbackRAR is an indication that the gNB received the random access preamble from the UE (and the fallbackRAR includes UL grant for Msg 3), and then UE may directy transmit Msg 3 (PUSCH transmission) on resources indicated by UL grant included in the fallbackRAR.

In 2-step CBRA or CFRA RACH procedure, it is possible that a UE switches or falls back to a 4-step RACH procedure under various conditions, such as (e.g., by way of illustrative examples of the types of problems or errors that may arise during RACH procedures):

    1) Switching from 2-step RACH procedure to 4-step RACH procedure. This can happen if the number of unsuccessful Msg A transmissions exceeds a threshold defined by the variable Msg A-Trans-Max-r16. The UE will retransmit (attempting to transmit/retransmit) Msg A until Msg A-TransMax-r16 number of times (allowing a maximum number of transmissions e.g., to 1,2,4, 6, 8, 10, 20, 50,100, 200 in current TS38.331 specification) and then will switch to 4-step RACH starting with Msg 1 transmission). This can mean that the gNB did not successfully receive the preamble for Msg A (e.g., if the UE did not transmit with sufficient power). Or, this can mean that the UE did not receive Msg B from the gNB (e.g., this may occur if the gNB transmits Msg B with too low power or with too aggressive a modulation and coding scheme (MCS) for Msg B (that is, either a too low aggregation level for the physical downlink control channel (PDCCH) and/or a too high MCS for the physical downlink shared channel (PDSCH) being scheduled by the PDCCH). Or, this can happen if Msg A preambles collide among different UEs (causing the gNB to be unable to receive/decode the random access preamble from the UE).

    2) Fall back from 2-step to 4-step RACH. This can happen if UE receives a fallbackRAR from the gNB when the gNB did not receive the Msg A PUSCH payload, but received the Msg A RACH preamble. Upon reception of a fallbackRAR from the gNB, the UE will fall back to 4-step RACH procedure by sending Msg 3 to the network via the UL resources provided in UL grant provided in fallbackRAR. Or, this can mean that UE is not able to transmit Msg A PUSCH, e.g., due to listen-before-talk (LBT) problems (e.g., wireless media is occupied, based on LBT, thereby preventing the UE from transmitting Msg A). Or, this can mean that UE did not transmit Msg A PUSCH with sufficient power (e.g., the maximum power for transmission may have been reached and/or was not of sufficient power). Or, this can mean that gNB did not receive Msg A PUSCH correctly (e.g., gNB was unable to decode Msg A PUSCH payload data).

In terms of providing ideal or at least good network performance, if a UE is configured with (or to perform) 2-step RACH procedure, the UE should (ideally) complete its RACH procedure using 2-step RACH. Performing 2-step RACH switching to 4-step RACH procedure or 2-step RACH fall back to 4-step RACH are mechanisms that help the network revert or recover from errors or overload situations. However, fallback and switching from 2-step to 4-step RACH procedures introduce additional delay in the end-to-end communication, and network should take actions to reduce the number of times that such fallback or switching from 2-step RACH procedure to a 4-step RACH procedure occurs.

In either case of a switch to a 4-step RACH procedure or a fall back to a 4-step RACH procedure, there is a last attempted Msg A transmission (for that RACH procedure) by the UE that was unsuccessful, and there may be one or more reasons (or causes) for the failed Msg A transmission or otherwise a failed 2-step RACH procedure. According to an example embodiment, it may be useful for the network to receive random access information associated with RACH procedures, such as for failed RACH procedures, including for the failed 2-step RACH procedure. Based on such a random access information, the network may adjust one or more parameters for UEs in order to improve performance of random access procedures.

The New Radio (NR) (5G) UE RACH (random access) report has been defined in Rel-16. Even though LTE has been used as a baseline, NR UE RACH Report can log up to 8 RACH procedures unlike the LTE counterpart where a single RACH procedure can be logged. NR UE RACH Report logs RACH procedures that completed successfully, even though they experienced one or more failed RACH attempts. Logged random access information may be stored in a dedicated variable for this purpose, e.g., within a RRC layer's variable called VarRAReport, which is maintained for 48 hours in the UE. If the network does not retrieve the NR UE RACH Report within 48 hours then the whole random access (RACH) Report is deleted by the UE. The network may retrieve the NR UE RACH Report through a UEInformationRequest from the gNB, and then a UEInformationResponse from the UE, but the UE does not provide the gNB with any notification regarding the random access report (e.g., of when information has been logged in the random access report, or when the random access report may be full).

While some form of random access reports may be currently provided by UEs, there is insufficient structure and/or requirements for such UE random access reports. Presently, for example, the network is unable to determine a reason for or set of conditions associated with a fallback or switching of a UE from a 2-step RACH procedure to a 4-step RACH procedure. Moreover, there is currently no way for the network to control a number of 2-step RACH procedures that can be logged or a number of 4-step RACH procedures that can be logged within a random access report. Also, current random access reports do not allow for logging and reporting of information associated with failure of 2-step RACH procedures.

Therefore, according to an example embodiment, improved techniques are described or provided for random access logging and/or reporting for wireless networks. A UE may classify random access procedures of the UE (e.g., that are performed or attempted by the UE) into either a first category of random access procedures that are initiated (or first attempted) with a 2-step random access attempt (attempted transmission of Msg A of 2-step RACH procedure), or a second category of random access procedures that are initiated (or first attempted) with a 4-step random access attempt (attempted transmission of Msg 1 of a 4-step RACH procedure). For example, a random access procedure of the first category is a random access procedure that initially (or at the beginning of the random access procedure) includes a Msg A (of a 2-step RACH procedure) transmission attempt (e.g., where the 2-step RACH procedure may be successful, or alternatively may be unsuccessful and result in a switch or fall back of the UE to a 4-step RACH procedure). A random access procedure of the second category is a random access procedure that initially includes a Msg 1 (of a 4-step RACH procedure) transmission attempt, where the 4-step RACH procedure may or may not be successful. Thus, random access procedures of the second category refer to only 4-step RACH procedures.

The UE may receive, from the gNB, a random access report configuration (e.g., via broadcast.multicast/unicast signaling, radio resource control (RRC) messages, and/or other messages or transmissions from the gNB). For example, the random access report configuration may indicate one or more parameters to be logged in the random access report, and/or information relating to limits, structure and/or content of the random access report.

For example, the random access report configuration received by the UE from the gNB may indicate at least a quantity limitation for logging random access information in a random access report for random access procedures of at least one of the first category of random access procedures or the second category of random access procedures. For example, the quantity limitation may indicate at least one of:

a minimum number of random access procedures of the first category or the second category for which resources are (or should be) reserved in the random access report;
a minimum number of random access procedures of the second category for which resources are (or should be) reserved in the random access report;
a maximum number of random access procedures of the first category for which resources can be allocated in the random access report; and/or a maximum number of random access procedures of the second category for which resources can be allocated in the random access report.

The UE may log (e.g., store in memory) random access information (e.g., one or more parameters associated with the random access procedure) in the random access report for one or more random access procedures of at least one of the first category or the second category, in accordance with the random access report configuration. The UE may send the random access report to the network node or gNB, e.g., in response to receiving a request from the gNB.

Also, according to an example embodiment, the UE may transmit or send a notification to the gNB to notify the gNB or network node when random access information for a specific or threshold (e.g., maximum) number of random access procedures of the first category of random access procedures have been logged in the random access report. The UE may also transmit or send a notification to the gNB to notify the gNB or network node when random access information for a specific or threshold (e.g., maximum) number of random access procedures of the second category of random access procedures have been logged in the random access report. And/or, the UE may also transmit or send a notification to the gNB to notify the gNB or network node when random access information for a specific or threshold (e.g., maximum) number of total random access procedures that are allowed for both the first category and the second category of random access procedures have been logged in the random access report. For example, the gNB may receive such a notification, and the gNB or network node may then send a request to the UE to request the UE to transmit the random access report to the gNB.

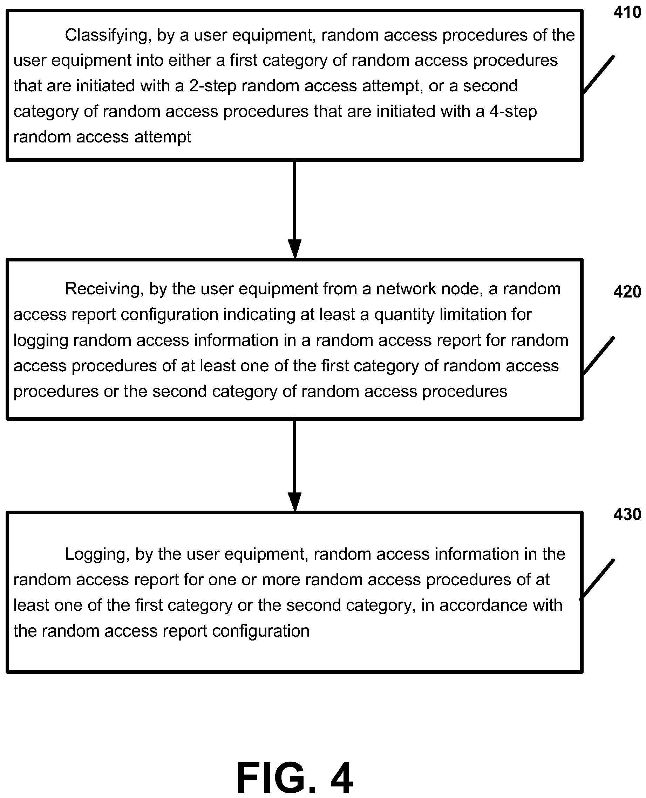

FIG. 4 is a flow chart illustrating operation of a user equipment (UE) or user device according to an example embodiment. Operation 410 includes classifying, by a user equipment (UE), random access procedures of the user equipment into either a first category of random access procedures that are initiated with a 2-step random access attempt, or a second category of random access procedures that are initiated with a 4-step random access attempt. Operation 420 includes receiving, by the user equipment from a network node (e.g., gNB, DU, BS), a random access report configuration indicating at least a quantity limitation for logging (e.g., storing) random access information in a random access report for random access procedures of at least one of the first category of random access procedures or the second category of random access procedures. Operation 430 includes logging, by the user equipment, random access information in the random access report for one or more random access procedures of at least one of the first category or the second category, in accordance with the random access report configuration.

According to an example embodiment of the method of FIG. 4, the quantity limitation indicated by the random access report configuration may indicate at least one of: a minimum number of random access procedures of the first category or the second category for which resources are reserved in the random access report; or a maximum number of random access procedures of the first category or the second category for which resources can be allocated in the random access report.

Or, the quantity limitation indicated by the random access report configuration may indicate at least: a minimum number of random access procedures of the first category for which resources are reserved in the random access report. Or, the quantity limitation indicated by the random access report configuration indicates at least: a minimum number of random access procedures of the second category for which resources are reserved in the random access report.

Or, the quantity limitation indicated by the random access report configuration may indicate at least: a maximum number of random access procedures of the first category for which resources can be allocated in the random access report. Or, the quantity limitation indicated by the random access report configuration may indicate at least: a maximum number of random access procedures of the second category for which resources can be allocated in the random access report.

According to an example embodiment of the method of FIG. 4, the classifying may include: classifying random access procedures of a user equipment that include at least one failed random access attempt into either a first category of random access procedures that are initiated with a 2-step random access attempt, or a second category of random access procedures that are initiated with a 4-step random access attempt.

The method of FIG. 4 may also include receiving, by the user equipment from the network node, a request for the random access report; and transmitting, by the user equipment to the network node in response to receiving the request, the random access report.

According to an example embodiment of the method of FIG. 4, the method may include determining, by the user equipment, that random access information for the maximum number of random access procedures of the first category have been logged in the random access report; and transmitting, by the user equipment to the network node, a notification that random access information for the maximum number of random access procedures of the first category have been logged in the random access report.

According to an example embodiment of the method of FIG. 4, the method may include determining, by the user equipment, that random access information for the maximum number of random access procedures of the second category have been logged in the random access report; and transmitting, by the user equipment to the network node, a notification that random access information for the maximum number of random access procedures of the second category have been logged in the random access report.

According to an example embodiment of the method of FIG. 4, the quantity limitation indicated by the random access report configuration indicates at least a minimum number of random access procedures of the first category for which resources are to be reserved in the random access report, the method comprising: determining, by the user equipment, that random access information for the minimum number of random access procedures of the first category have been logged in the random access report; and transmitting, by the user equipment to the network node, a notification that random access information for the minimum number of random access procedures of the first category have been logged in the random access report.

According to an example embodiment of the method of FIG. 4, the quantity limitation indicated by the random access report configuration indicates at least a minimum number of random access procedures of the second category for which resources are to be reserved in the random access report, the method comprising: determining, by the user equipment, that random access information for the minimum number of random access procedures of the second category have been logged in the random access report; and transmitting, by the user equipment to the network node, a notification that random access information for the minimum number of random access procedures of the second category have been logged in the random access report.

According to an example embodiment of the method of FIG. 4, the method may include determining, by the user equipment, a maximum total number of random access procedures for which random access information may be logged in the random access report, wherein the maximum total number of random access procedures includes both the first category of random access procedures and the second category of random access procedures; determining, by the user equipment, that random access information for the maximum number of random access procedures have been logged in the random access report; and transmitting, by the user equipment to the network node, a notification that random access information for the maximum number of random access procedures have been logged in the random access report.

According to an example embodiment of the method of FIG. 4, the method may include transmitting, by the user equipment, a last attempted Msg A of a 2-step random access procedure; receiving, by the user equipment from the network node, a fallback random access response indicating that the user equipment should perform a fallback from a 2-step random access procedure to a 4-step random access procedure, or determining, by the user equipment, that a maximum number of Msg A transmissions have been reached indicating that the user equipment should perform switching from a 2-step random access procedure to a 4-step random access procedure; wherein the logging comprises logging, by the user equipment, information related to a fallback or switching of the 2-step random access procedure to a 4-step random access procedure.

According to an example embodiment of the method of FIG. 4, the logging information related to a fallback or switching of the 2-step random access procedure to a 4-step random access procedure may include logging one or more of the following parameters related to the last attempted Msg A transmission of the 2-step random access procedure before performing a fallback or switching from the 2-step random access procedure to the 4-step random access procedure: a Msg A preamble transmission power used for the last attempted Msg A transmission; a Msg A PUSCH data transmission power used for the last attempted Msg A transmission; a Msg A preamble identifier (preamble ID) used for the last attempted Msg A transmission; a Msg A PUSCH (physical uplink shared channel) data scrambling information (which may include scrambling information, such as a data scrambling identity, such as an indication of the method or type of scrambling identity used (PCI or transmitted scrambling identity) and/or an actual value of the scrambling identity) used for the last attempted Msg A transmission; a random access procedure (RACH) occasion or resources that were used for RACH preamble transmission for the last attempted Msg A transmission of the 2-step random access procedure; or a PUSCH (physical uplink shared channel) Occasion or resources that were that were used for PUSCH data transmission for the last attempted Msg A transmission of the 2-step random access procedure.

According to an example embodiment, the random access report configuration may further indicate one or more parameters to be logged by the user equipment for the first category and/or second category of random access procedures.

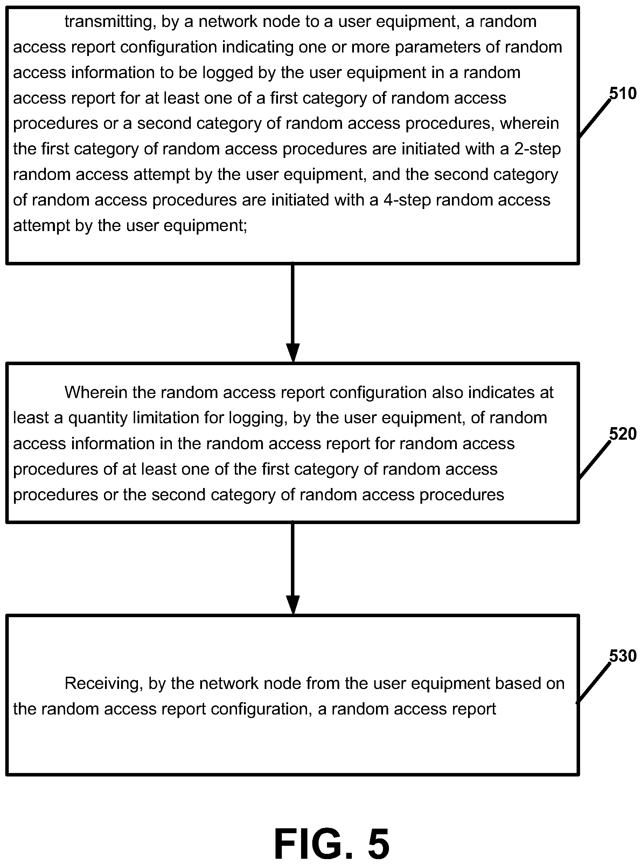

FIG. 5 is a flow chart illustrating operation of a network node (e.g., gNB, DU, BS) according to an example embodiment. Operation 510 includes transmitting, by a network node to a user equipment, a random access report configuration indicating one or more parameters of random access information to be logged by the user equipment in a random access report for at least one of a first category of random access procedures or a second category of random access procedures, wherein the first category of random access procedures are initiated with a 2-step random access attempt by the user equipment, and the second category of random access procedures are initiated with a 4-step random access attempt by the user equipment. Operation 520 includes: wherein the random access report configuration also indicates at least a quantity limitation for logging, by the user equipment, of random access information in the random access report for random access procedures of at least one of the first category of random access procedures or the second category of random access procedures. Operation 530 includes receiving, by the network node from the user equipment based on the random access report configuration, a random access report.

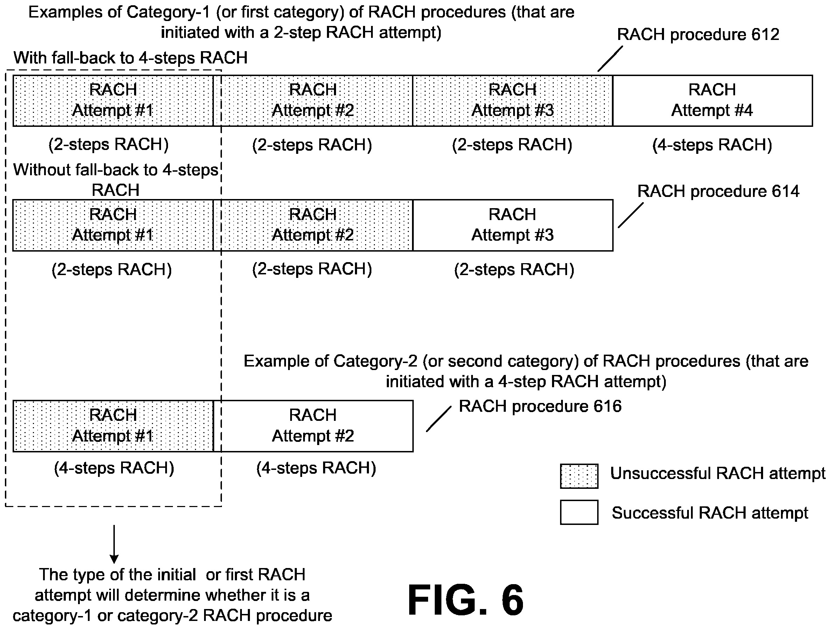

FIG. 6 is a diagram illustrating different categories of random access (RACH) procedures according to example embodiments. The type (2-step or 4-step) of an initial or first RACH attempt of a RACH procedure determines whether a RACH procedure is a first category or a second category of random access (RACH) procedures. Two examples of a first category (or category-1) of random access (RACH) procedures include RACH procedure 612 and RACH procedure 614, which are initiated with a 2-step RACH attempt (e.g., by UE initially transmitting or attempting to transmit Msg (message) A, as RACH attempt #1). For RACH procedure 612, a first or initial RACH attempt (RACH attempt #1) is performed (e.g., by the UE attempting to transmit Msg A) and is unsuccessful. Similarly, RACH attempt #2 and RACH attempt #3 for RACH procedure 612 are attempted (e.g., UE attempts to transmit Msg A to gNB), but are still unsuccessful. In this example, the UE may have reached the maximum number of Msg A transmission attempts, or may have received a fallbackRAR response from the gNB. The UE may then, as part of RACH procedure 612, switch or fall back to a 4-step RACH procedure, and performs a RACH attempt #4 (e.g., by UE transmitting Msg 1 or Msg 3, depending on whether there is a UE switch or fallback to 4-step RACH procedure), which is successful. For RACH procedure 614, the UE may perform 2-step RACH attempt #1 and RACH attempt #2 (by attempting to transmit Msg A), which are unsuccessful. Finally, RACH attempt #3 (by the UE transmitting a Msg A of a 2-step RACH procedure) of RACH procedure 614 is successful. Note that no switch or fall back to a 4-step RACH procedure is performed for RACH procedure 614 (e.g., since the 2-step RACH procedure is eventually successful, at RACH attempt #3). RACH procedure 616 is an example of a second category (or category-2) of RACH procedures, which are initiated with a 4-step random access attempt (e.g., by transmitting or attempting to transmit Msg 1 of a 4-step RACH procedure). RACH attempt #1 of RACH procedure 616 is performed by the UE transmitting or attempting to transmit Msg 1 (of a 4-step RACH), which is unsuccessful. RACH attempt #2 of RACH procedure 616 is successful (e.g., meaning that the RACH procedure 616 was successfully completed).

As noted, a random access report configuration may be provided by a network node or gNB to a UE, and may, for example, indicate one or more parameters of random access information to be logged in the random access report. The random access report configuration may also indicate or include a quantity limitation for logging random access information in the random access report.

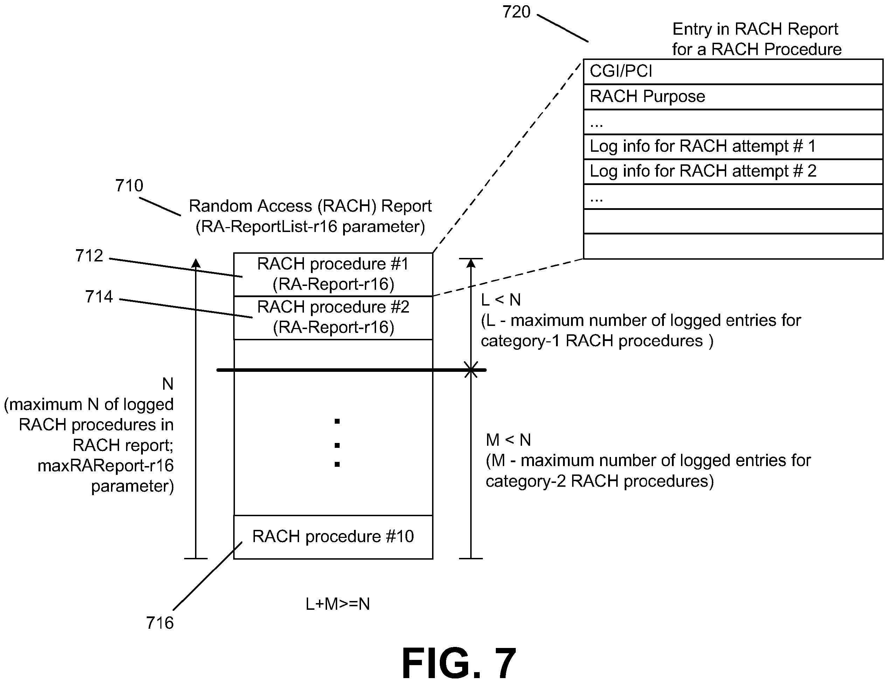

FIG. 7 is a diagram illustrating a random access report according to an example embodiment. A random access (RACH) report 710 may include an entry for each of one or more random access procedures. In this example, there may be N total entries provided in a random access report 710. In this example, N = 10, which means random access information may be logged in the random access report 710 up to 10 total random access procedures. The random access report configuration may indicate, e.g., a total number of random access procedures (e.g., N=10 in this example) for which resources (e.g., entries) may be provided in the random access report 710.

As shown in FIG. 7, the random access report 710 may include N=10 total entries (e.g., including entry 712 for RACH procedure #1, entry 714 for RACH procedure #2, ... and entry 716 for RACH procedure #10), with one entry being provided for each of a plurality of random access procedures. The UE may log or store parameter(s) of random access information 720 associated with a UE random access procedure in each of the entries (e.g., entries 712, 714, ... 716) of the random access report 710. For example, information 720 of an entry may include a cell identity, such as a cell global identity (CGI) or a physical cell identity (PCI) that indicates the cell or network node to which the UE was attempting to perform random access, a RACH purpose (e.g., to establish a connection, or other purpose), and log information (e.g., one or more parameters associated with the random access procedure) for each of 1 or more RACH attempts (e.g., RACH attempts #1, #2, #3, #4 of RACH procedure 612, FIG. 6) of the RACH procedure. Thus, random access information may be stored in each entry of the random access report 710, with one entry (or one resource/set of resources in the report 710) being provided for each of one or more random access procedures, up to a maximum number (N) of random access procedures that may be logged in the random access report.

In an example embodiment, the network node or gNB may configure (or control) the UE to allocate or provide a specific number(s) or percentage(s) of entries of the random access report for one or both of the first category and/or second category of random access procedures. Therefore, for example, the random access report configuration may indicate a maximum and/or minimum number of random access procedures of the first category and/or second category of random access procedures for which resources are or may be provided in the random access report. For example, in some cases, e.g., based on the random access report configuration, a minimum number of random access procedures of the first category for which resources are or should be provided in the random access report, and/or a maximum number of random access procedures of the second category that may be allocated within the random access report.

For example, the random access report configuration may indicate one or more of: 1) N - a total number of logged entries of random access procedures within the random access report; (N = 10 in the example shown in FIG. 7); 2) L - a maximum number of logged entries of random access procedures of the first category (or category-1) within the random access report, which is also the number of random access procedures of the first category for which random access information may be logged in the random access report; and/or 3) M - a maximum number of logged entries of random access procedures of the second category (or category-2) within the random access report, which is also the number of random access procedures of the second category for which random access information may be logged in the random access report. For example, the random access report configuration may indicate one or more of: N=10, L=4, and/or M=6. For example, the gNB may indicate, in the random access report configuration, that L=4, and M=6. Alternatively, the random access report configuration may only indicate one of these parameters, e.g., by indicating that N=10 (maximum total number of entries) and M=6 (maximum number of entries = 6 for RACH procedures of the second category, which means that at a minimum, the UE should provide (reserve or allocate) entries for at least 4 possible logged entries of random access procedures of the first category.

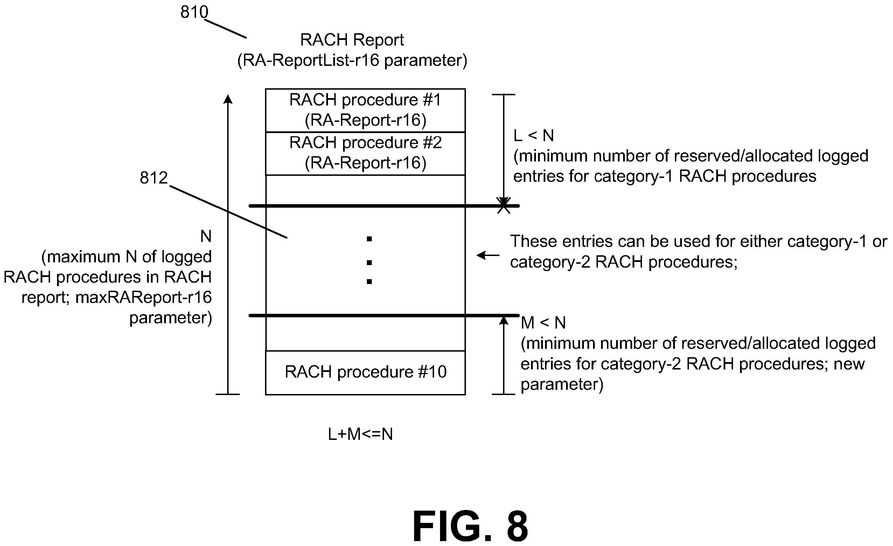

FIG. 8 is a diagram illustrating a random access report according to another example embodiment. Alternatively, or in addition, as shown in FIG. 8, the random access report configuration may indicate (and the random access report 810 may provide) a minimum value(s) of reserved/allocated logged entries for the first category and/or the second category of random access procedures. For example, in such a case, N may still refer to a total number of logged entries (of both categories), L may indicate a minimum number of logged entries that should be allocated or reserved by the UE for random access procedures of the first category, and/or M may indicate a minimum number of logged entries that should allocated or reserved by the UE for random access procedures of the second category. For example, if N = 10, and L = 4, and M=3, this means that the UE must reserve or allocate at least 4 entries in the random access report for random access procedures of the first category, the UE must reserve or allocate at least 3 entries in the random access report for random access procedures of the second category. However, at 812, the remaining logged entries (e.g., the total number of logged entries (10 in this example), minus any allocated minimum logged entries (4 in this example), which is 3 in this example) may be used to log random access information for either the first category (category-1) or the second category (or category-2) random access procedures. Alternatively, the random access report configuration may indicate, and the UE random access report may provide or use, both at least one maximum value and/or at least one minimum value, in some cases.

Various further illustrative examples, features and/or details are described below.

According to an example embodiment, the network or a network node (e.g., gNB) may control or configure (e.g., by transmission of a random access report configuration) a number of random access (RACH) related information (or a number of logged entries within a RACH report) for a first category of RACH procedures that were started or initiated with a 2-step RACH attempt (e.g., started with a Msg A transmission attempt), and/or control or configure a number of RACH related information (or a number of logged entries within the RACH report) for a second category of RACH procedures that were started or initiated with a 4-step RACH attempt (e.g., started with a Msg 1 transmission attempt). Also, the UE RACH report, which may be transmitted to the network node or gNB, may include information that can aggregate (or include both of) the random access information (logged entries) for both the first category of RACH procedures and the second category of RACH procedures.

In addition, an Xn Interface signaling of PUSCH scrambling sequence information (or, which may also be referred to as PUSCH scrambling information) may be provided: A network node (e.g., RAN node, BS, AP, eNB, gNB) can indicate to its neighbours over the Xn interface whether PUSCH scrambling sequence on its cells is based on cell ID (PCI) or whether it is based on one of the alternative transmitted (e.g., broadcasted or signalled) values dataScramblingIdentityPUSCH or msgA-dataScramblingIndex. Also, or in the alternative, the PUSCH scrambling sequence information sent by a network node to another network node, may (e.g., also) indicate the specific identity(ies) (or value(s)) used by the network node for PUSCH scrambling. Also, a F1 interface may be used for signaling of PUSCH scrambling sequence information in a RAN split architecture. For instance, PUSCH scrambling sequence information can be further sent from a gNB-CU to a gNB-DU.

According to an example embodiment, if the maximum number of logged entries related to the first category of RACH procedures, the UE may not log 2-step RACH information and may log instead the event that a maximum number of entries (e.g., maximum number of logged entries of the first category of RACH procedures) is reached. The RACH report may be cleared after a specific time period (e.g., 48 hours or other time period). Or the RACH report may be cleared a specific time period after reaching one or more (e.g., as configured by the gNB) maximum logged entries (total maximum number of logged entries N is reached, or a maximum number of logged entries L of the first category of RACH procedures, and/or a maximum number of logged entries M of the second category of random access procedures).

In one alternative, if the maximum number of first category of RACH procedures (that started with a 2-step RACH attempt) is reached, the UE logs the current 2-step RACH information by replacing the oldest part (oldest logged entry) of the 2-step RACH log information with the random access information of the current 2 step RACH procedure, and logs the event of replacement.

If the maximum number of entries related to the first category of RACH procedures is not reached, then upon reception of a fallbackRAR by the UE or when a maximum number of Msg A transmissions is reached, the UE logs in the UE RACH Report information related to the outcome of the last Msg A transmission (before switching or fall back to 4-step RACH).

Additionally, the network node or gNB may configure which measurements related to a RACH procedure that a UE should log. The gNB may send a random access report configuration to indicate one or more measurements or parameters to be logged of random access information for each logged entry (for each logged random access procedure).

UE may indicate to the network node or gNB the availability of the UE RACH Report. UE may include a trigger type indicator that could indicate to network e.g., that last entry being logged is because Msg A-TransMax-r16 (maximum number of Msg A transmissions) is reached. The UE may also indicate in the UE RACH report in the availability indicator to the network that maxEntries2stepRACHReached = True (e.g., to indicate that the maximum number of logged entries in RACH report for random access procedures of the first category, initiated by a 2-step RACH attempt, has been reached). Timing or time information on when this event happened can be included in the UE RACH Report. The timing information may be in relative time with association to SFN (system frame number) and a physical cell identity (PCI) or it may be in absolute time (UTC). The network node or gNB may request and obtain from the UE the random access report, e.g., based on the notification received from the UE.

Two methods can be considered to control the number of 2-step RACH related information (or random access information of a first category of random access procedures initiated by a 2-step RACH attempt) logged in the UE RACH Report: 1) Without network configuration. The number of 2-step RACH procedures in the RACH Report can be set to a fixed value. 2) With network configuration. Network node or gNB may configure UE RACH Report logging at a UE. In this case, network node or gNB may configure a UE whether the UE should log 2-step RACH information (or random access information of a first category of random access procedures initiated by a 2-step random access attempt), 4-step RACH information (or random access information of a second category of random access procedures initiated by a 4-step random access attempt), or both of those. In addition, the network node may configure one or more quantity limitations with respect to logging of random access information, e.g., such as: a maximum number of logged entries in the UE RACH report for the first category of random access procedures (RACH procedures that were initiated by a 2-step RACH attempt), a maximum number of logged entries in the UE RACH report for the second category of random access procedures (RACH procedures that were initiated by a 2-step RACH attempt), a minimum number of reserved or allocated entries in the UE RACH report that should be reserved or allocated by the UE for the first category of random access procedures, and/or a minimum number of reserved or allocated entries in the UE RACH report that should be reserved or allocated by the UE for the second category of random access procedures.

This information can be transmitted by the network node or gNB, e.g., via dedicated RRC signaling to a UE. In one option, an MDT (Minimization of Drive Test) configuration can be transmitted to an NG-RAN node (e.g., gNB or gnB-CU) from operations, administration, and management (OAM) (Management-based MDT) or Core network (Signaling-based MDT) (and subsequently forwarded to a UE) with jobType = RAReport. The MDT configuration given to the UE can indicate the above information. This information may be alternatively broadcasted together with 2-step RACH parameters e.g., inside BWP (bandwidth part)-UplinkCommon IE (information element). The MDT Configuration towards a gNB may further include a random access report configuration, e.g., which may indicate the RACH parameters that should be logged by a UE. It will be the responsibility of the gNB to subsequently forward this configuration to a UE. Such configuration can help to reduce the amount of RACH-related logging that a given UE is expected to log in its RACH Report, as well as reducing the amount of data that would afterwards need to be transferred to the network as part of the RACH report.

Minimization of Drive Test (MDT) is a standardized 3GPP feature which involves commercial UEs in automated collection of measurements and reporting them to the network [TS 37.320]. The fundamental concept aims at replacing dedicated and costly drive testing performed for network optimization. MDT involves regular users of cellular network and makes usage of their data that are collected anyway (e.g., for mobility purposes). Two MDT reporting approaches were defined in Rel-10: Immediate MDT reporting and Logged MDT reporting. Immediate MDT reporting means that the UE generates real time report of radio measurements immediately after performing them. In Logged MDT reporting, the configuration is done when UE is in connected mode and the MDT data collection is done at the UE when it enters idle mode. Deferred reports in a form of logs are then sent when entering connected mode. MDT measurement results are put into MDT Trace Records and signalled onwards to operators' OAM entity for further post-processing.

According to an example embodiment, the UE random access report may include random access information logged for both 2-step and 4-step RACH procedures. The network node or gNB may configure a maximum number of entries (RACH procedures to be logged) in the UE RACH report that can carry 2-step RACH related information (e.g., a maximum number of logged entries for a first category of random access procedures that were initiated by a 2-step RACH attempt). The number of such entries may depend on 2-step RACH performance and how much logging of 2-step RACH information the network wants to log (as opposed to 4-step RACH information) to determine erroneous behaviour and to adjust 2-step RACH related parameters accordingly. This number could alternatively be a fixed value.

The UE may inform the network node or gNB that a maximum number of entries related to 2-step RACH information is reached (e.g., a maximum number of logged entries in the RACH report for the first category of RACH procedures has been met). For example, a new parameter maxEntries2stepRACHReached = True can be introduced, and transmitted from the UE to gNB, to indicate this. In addition to this parameter, a timestamp can be included to inform the network when the maximum number of entries related to 2-step RACH is reached. This timestamp can further indicate after which point in time a UE may have started to miss logging of RACH procedures due to unavailability of internal storage according to its configuration. There are several ways that the UE can signal this information to the network: This can be logged in the UE RACH Report by indicating this information next to the 2-step related entry for which maxEntries2stepRACHReached became True. Or a parameter in the logged entry in the RACH report may include the time that the maximum number of logged entries of 2-step RACH procedures (or a maximum number of logged entries for a first category of RACH procedures) has been reached or met. This can alternatively be indicated in the availability indication message for instance to prompt the network for fast retrieval (e.g., in the UEMeasurementsAvailable-r16 in RRCSetupComplete, RRCReconfigurationComplete, RRCReestablishmentComplete, or in RRCResumeComplete.)

Knowledge of the time when the maximum number of 2-step RACH entries (e.g., time when the maximum number of logged entries in RACH report for the first category of RACH procedures) is reached in the UE RACH Report may assist the network (or network node or gNB) make decisions or adjust parameters (e.g., to retrieve 2-stepRACHReport more often, to adjust the maximum size of 2-step RACH information within the NR UE RACH Report (e.g., to adjust a number of logged entries allocated or provided in the RACH report for the first category of RACH procedures), to provide a UE with more dedicated 2-step RACH resources, etc.

If the maximum number of entries related to 2-step RACH information is not reached then when UE receives a fallbackRAR by the gNB or when Msg A-TransMax-r16 (maximum number of Msg A transmission attempts) is reached, this triggers an internal logging of information at the UE pertaining to the fallback or switching of the 2-step to 4-step RACH. Specifically, UE may log the following information, e.g., related to a fallback or switching of the 2-step random access procedure to a 4-step random access procedure, such as logging of information related to the last attempted Msg A transmission of the 2-step random access procedure before performing a fallback or switching from the 2-step random access procedure to the 4-step random access procedure:

A Msg A preamble transmission power used for the last attempt (a PUSCH occasion may include a slot and/or resources/symbols within the slot).

a Msg A PUSCH data transmission power used for the last attempted Msg A transmission;
a Msg A preamble identifier (preamble ID) used for the last attempted Msg A transmission;
a Msg A PUSCH (physical uplink shared channel) data scrambling information used for the last attempted Msg A transmission (e.g., where Msg A PUSCH data scrambling information, which may also be referred to as Msg A PUSCH scrambling information, may include scrambling-related information that describes a scrambling used for the network node, e.g., such as information indicating that a Msg A PUSCH scrambling sequence used by one or more cells of the network node for Msg A PUSCH data scrambling is based on either a cell identity or a broadcasted or transmitted scrambling identity, and/or information indicating an actual scrambling identity (or nID);
a Cell ID (or PCI) on which UE attempted the 2-step RACH procedure;
a random access procedure (RACH) occasion or resources that were used for RACH preamble transmission for the last attempted Msg A transmission of the 2-step random access procedure (a RACH occasion may include a slot and/or resources/symbols within the slot); or
a PUSCH (physical uplink shared channel) Occasion or resources that were that were used for PUSCH data transmission for the last attempted Msg A transmission of the 2-step random access procedure.

By logging Msg A preamble and PUSCH transmission power used for the last Msg A transmission attempt, the network (e.g., network node or gNB) can determine if the reason why the gNB did not receive the transmission by the UE is due to transmission power problems. Network can collect this information from one or more UEs and use it to readjust the transmission power parameters for the UE and/or any other RACH parameters, and/or for one or more cells.

Msg A Preamble ID can give an indication whether the UE payload size for transmission was allowing for transmission within the preamble Group A. Further, the preamble ID can be used for evaluating potential collisions on the PUSCH Occasions (PO), since the preamble ID will also indicate which PUSCH Occasion (for the given preamble group) were used by the UE for the Msg A PUSCH transmission. Furthermore, including the Preamble ID may be useful to map CFRA RACH resources to a given preamble and subsequently to a given UE.

As noted above, Msg A PUSCH transmission can be generated by the UE using a scrambling sequence generator based on either a physical cell identity (PCI) or one of the transmitted (e.g., broadcast or signalled) scrambling identity values (e.g., one of dataScramblingIdentityPUSCH or msgA-dataScramblingIndex), which may be transmitted (e.g., broadcast or signalled) by a gNB. The UE calculates the scrambling sequence used for scrambling of PUSCH transmission by UE, based on the scrambling identity.

In addition, the UE can log the exact Msg A scrambling identity used to generate the PUSCH together with an indicator whether it was created based on PCI or by using (based on) the configured or transmitted (e.g., broadcasted or signalled) scrambling identity values dataScramblingIdentityPUSCH or msgA-dataScramblingIndex. This can be done by indicating in the UE RACH Report in an entry for PUSCH scrambling sequence or PUSCH scrambling information, e.g., as one of the following:

(x,y), where x can be the exact scrambling ID used by the UE and y is a value in the set {Cell ID (PCI), dataScramblingIdentityPUSCH, msgA-dataScramblingIndex}. When Msg A PUSCH is under consideration, an entry e.g., (230, msgA-dataScramblingIndex) would mean that the scrambling method is configured by the network and the higher layer parameter msgA-dataScramblingIndex is used for the initialization of the scrambling sequence generator by using the value 230.

In some cases, only the scrambling ID is indicated, assuming that gNB can determine if this corresponds to Cell ID (PCI) or to one of the transmitted (e.g., broadcasted or signalled) scrambling identity values (dataScramblingIdentityPUSCH or msgA-dataScramblingIndex).

In some cases, the UE may log in RACH report an indicator of whether a PCI is used as a scrambling ID or whether a a value is used instead as scrambling ID (or nID) for Msg A PUSCH transmission, namely it only reports the method used for initializing the scrambling sequence generator. In some cases, any combination of the above options can be used.

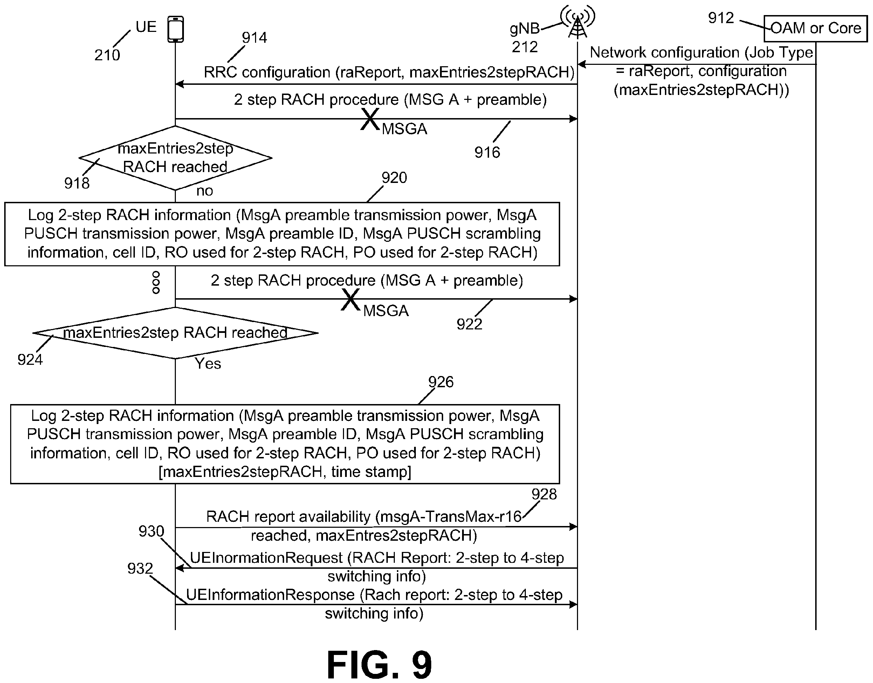

FIG. 9 is a flow chart illustrating operation of a system to log and report random access information according to an example embodiment. A UE 210, a gNB 212 and an OAM or core network 912 may be in communication. Upon reception of a network configuration from the OAM or Core network 912 that includes a random access report configuration, which may indicate, e.g., a maximum number of RACH procedures that started with 2-step RACH that can be logged in a RACH Report (e.g., a maximum number of logged entries in the RACH report for the first category of RACH procedures) as well as the RACH parameters subject to logging (that should be logged) by UE 210, gNB 212 further forwards or transmits this information to UE 210 at 914. At 914, this information may be forwarded to UE 210 by gNB 212 sending from gNB 212 to UE 210 a RRC configuration, such as by sending a RACHMeasurementLoggingConfiguration message. This message includes, for example, a maximum number of RACH procedures that started with 2-step RACH that could be logged in the RACH Report (e.g., a maximum number of log entries in RACH report for the first category of RACH procedures). The number may, for example, be less than 8 which is a current maximum size of a NR UE RACH Report, but other numbers may be used. It further includes a configuration indicating to the UE which RACH parameters should be subject to logging at each time, or for each logged RACH procedure. A subsequent RACHMeasurementLoggingConfiguration message towards a UE may update those parameters by erasing or deleting the previous configuration and replacing it with a new configuration. This information can be sent with RRC signaling, e.g., over SRB1 in DCCH logical channel. Alternatively, the RACHMeasurementLoggingConfiguration can be an IE (information element) in RRCReconfiguration or RRC Resume messages.

As an example, the RACHMeasurementLoggingConfiguration can include all RACH parameters subject to logging in a RACH Report with a Boolean indicator per parameter; only values with the indicator set to "True" will be logged by the UE. In this way, the network may enable a UE to only log a subset of the possible RACH parameters. For example, the network may decide it is not interested in the power levels of Msg A preamble and PUSCH payload of the last Msg A transmission. It can disable logging of this information by a UE in the RACH Report by setting the corresponding indicator to "False".

At 916, UE 210 performs a successful 2-step RACH procedure (i.e., a RACH procedure of the first category) including one or more failed Msg A transmission attempts (Msg A preamble and Msg A PUSCH), e.g., which may not be received by the gNB 212. At 918, the UE 210 determines whether the maximum number of entries in the RACH report for 2-step RACH procedures has been reached, which it has not.

At 920, the UE 210 logs random access information for the RACH procedure 916, including one or more parameters indicated or requested by the random access report configuration, such as the 2-step RACH information for the failed Msg A transmission attempts (e.g., Msg A preamble transmission power, Msg A PUSCH transmission power, Msg A preamble ID, Msg A PUSCH scrambling information, Cell ID (PCI and/or CGI), RACH Occasion used for 2-step RACH attempt, PUSCH Occasion used for 2-step RACH attempt, etc.).

At 922, the UE 210 performs another successful RACH procedure, which also includes one or more failed Msg A attempts. At 924, the UE 210 determines whether the maximum number of entries in the RACH report for 2-step RACH procedures has been reached, which it has. This means, in this example, that the last entry in the RACH report for 2-step RACH procedures will be filled based on logging step at 926 (bringing the number of logged entries in RACH report now to the maximum number of entries for 2-step RACH, after operation at 926). Thus, at 926, the UE 210 logs the random access information or parameters, such as Msg A preamble transmission power, Msg A PUSCH transmission power, Msg A preamble ID, Msg A PUSCH scrambling information, Cell ID (PCI and/or CGI), RACH Occasion used for 2-step RACH attempt, PUSCH Occasion used for 2-step RACH attempt, etc., and an indication or Boolean set to true to indicate that the maximum number of entries for 2-step RACH procedures has been met, and the time stamp indicating a time that this maximum number of 2-step entries was met.

At 928, availability of a UE RACH Report may be triggered to be sent to the gNB 212 when the maximum number of entries with 2-step RACH related information in the UE RACH Report is met (at 924). Alternatively, a notification of availability of RACH report may be sent to the gNB when a minimum number of reserved entries of a RACH report (of either category-1 or category 2 RACH procedures) have been logged in the RACH report. Thus, at 928, the UE 210 sends to gNB 212, a notification of availability of the RACH report, based on a maximum number of 2-step RACH log entries being met. UE can include this information (e.g., a Boolean indicating this maximum number of entries for 2-step RACH was met) in the UEMeasurementsAvailable-r16 IE. As one alternative, the UE can indicate availability of a RACH Report based on at least 2 conditions being met simultaneously, namely the number of category-1 RACH procedures exceeding a certain threshold and the number of category-2 RACH procedures exceeding a different threshold. If UE indicates availability of a NR UE RACH Report according to maxEntries2stepRACHReached=True, this would prompt the network to retrieve the NR UE RACH Report before (2-step) RACH entries start getting lost (or discarded or overwritten). Thus, at 930 and 932, the gNB 212 sends a request for the RACH report, and the UE sends the RACH report, respectively. gNB 212 may use the RRC procedure UEInformationRequest to retrieve RACH Report information by a UE only related to switching or to fallback. The UE will respond to this request with the relevant entries in the UE RACH Report.

Furthermore, each gNB may use (or UEs within a cell of the gNB may use) a Msg A PUSCH (physical uplink shared channel) data scrambling information to perform scrambling on Msg A PUSCH transmission, where Msg A PUSCH data scrambling information (or simply PUSCH scrambling information) may include scrambling-related information that describes a scrambling used for the network node for Msg A PUSCH transmission, e.g., such as information indicating that a PUSCH scrambling sequence used by one or more cells of the network node for Msg A PUSCH data scrambling is based on either a cell identity or a transmitted scrambling identity, and/or information indicating an actual scrambling identity (or nID) used for PUSCH data scrambling by the network node, and/or other scrambling related information for Msg A PUSCH transmission.

In order to reduce PUSCH data collisions between UEs (e.g., UEs transmitting PUSCH to different cells or to different network nodes), a first gNB may send a message to one or more neighbour gNBs that indicates a PUSCH scrambling sequence (used by UEs to transmit PUSCH data to the first gNB) for cells of the first gNB based on either a PCI or a configured (or transmitted) scrambling identity that is transmitted (e.g., broadcasted or signalled) by cell(s) of the first gNB. Thus, for example, the first gNB may send to its neighbour gNBs the method used to initialize the scrambling sequence generator, namely whether PCI is used for PUSCH scrambling or whether PUSCH scrambling for the first gNB was configured through higher-layer parameter configuration (e.g., one of the transmitted scrambling identities) by the first gNB. In this manner, the first gNB may notify neighbouring gNBs of a basis of a scrambling sequence, e.g., so that such neighbours may use or configure their UEs to use a different basis or method for PUSCH scrambling or a different scrambling sequence, e.g., to reduce the possibility of PUSCH data collisions among different UEs and/or among cells of different gNBs. Since this information is obtained by the network through the RACH Report sent by different UEs, this information can be subsequently sent from a gNB to its neighbours similarly by indicating the UE Identity for which it pertains. This can be done as XN SETUP REQUEST/RESPONSE or in NG-RAN NODE CONFIGURATION UPDATE messages.

Therefore, for a 2-step random access (RACH) procedure, Msg A PUSCH transmissions may be scrambled using a scrambling sequence generator that is initialized by the value cinit. See equation above for cinit, which may be determined based on nID, which may be either a cell identity, or a transmitted (e.g., broadcasted or signalled) scrambling identity. If two cells (that are neighbours) use the same time and frequency resources, and the UEs (within such cells) use the same scrambling identity, there will be destructive interference, and the receiving gNB cannot reliably decode the Msg A PUSCH transmission from a UE. On the other hand, as described herein, techniques are described to allow a gNB to communicate information to a neighbor gNB, e.g., so as to avoid this destructive interference (or rather, the channel decoder will have better probability of recovering PUSCH transmission). Thus, according to an example embodiment, a first network node (e.g., a first gNB) may send a message to a second network node indicating a PUSCH scrambling sequence information (or which may also be referred to as PUSCH scrambling information) indicating that a PUSCH scrambling sequence used by one or more cells (or used by UEs to transmit PUSCH transmission to the cell) of the first network node is based on either a cell identity or a transmitted (e.g., broadcasted or signalled) scrambling identity. This may allow, e.g., a second network node/gNB to adjust its scrambling sequence generator so that its UEs transmitting PUSCH will be more likely to avoid PUSCH interference with UEs transmitting PUSCH to the first network node.

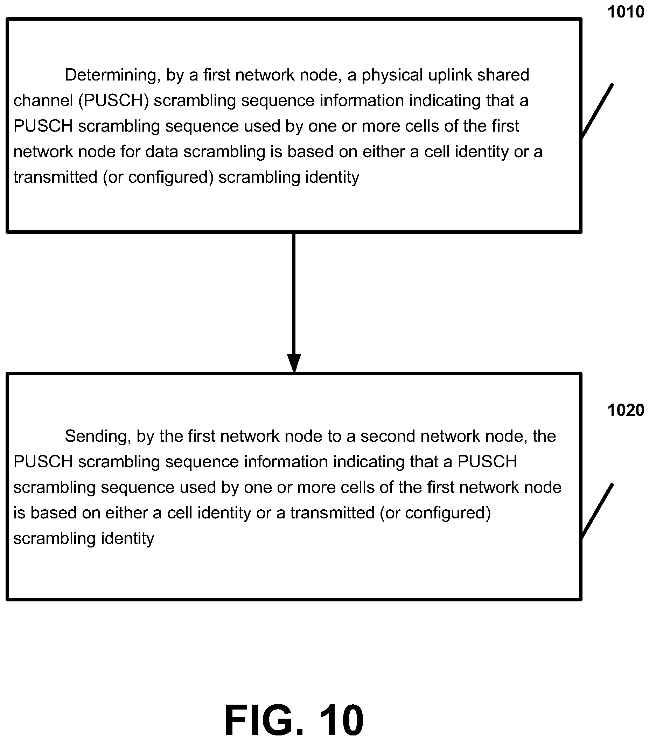

FIG. 10 is a flow chart illustrating operation of a network node according to an example embodiment. Operation 1010 includes determining, by a first network node, such as a gNB, a physical uplink shared channel (PUSCH) scrambling sequence information indicating that a PUSCH scrambling sequence used by one or more cells of the first network node for data scrambling based on either a cell identity (e.g., PCI) or a transmitted (e.g., broadcasted or signalled) scrambling identity. Operation 1020 includes sending, by the first network node to a second network node, such as a neighbouring gNB, the PUSCH scrambling sequence information indicating that a PUSCH scrambling sequence used by one or more cells of the first network node is based on either a cell identity or a transmitted (e.g., broadcasted or signalled) scrambling identity.

With respect to the method of FIG. 10, the PUSCH scrambling sequence information may indicate that a PUSCH scrambling sequence used by one or more cells of the first network node is based on one of the following (e.g., nID may be set to one of the following values): a physical cell identity (PCI); or a transmitted (e.g., broadcasted or signalled) scrambling identity, such as one of: a dataScramblingIdentityPUSCH; or a msgA-dataScramblingIndex.

With respect to the method of FIG. 10, the transmitting, by the first network node to a user equipment, configuration information indicating that the PUSCH scrambling sequence to be used by the user equipment to scramble a PUSCH transmission for a Msg A of a 2-step random access procedure, is based on either a cell identity or a transmitted (e.g., broadcasted or signalled) scrambling identity that is transmitted by the first network node.

With respect to the method of FIG. 10, the transmitted scrambling identity comprises at least one of: dataScramblingIdentityPUSCH; or msgA-dataScramblingIndex.

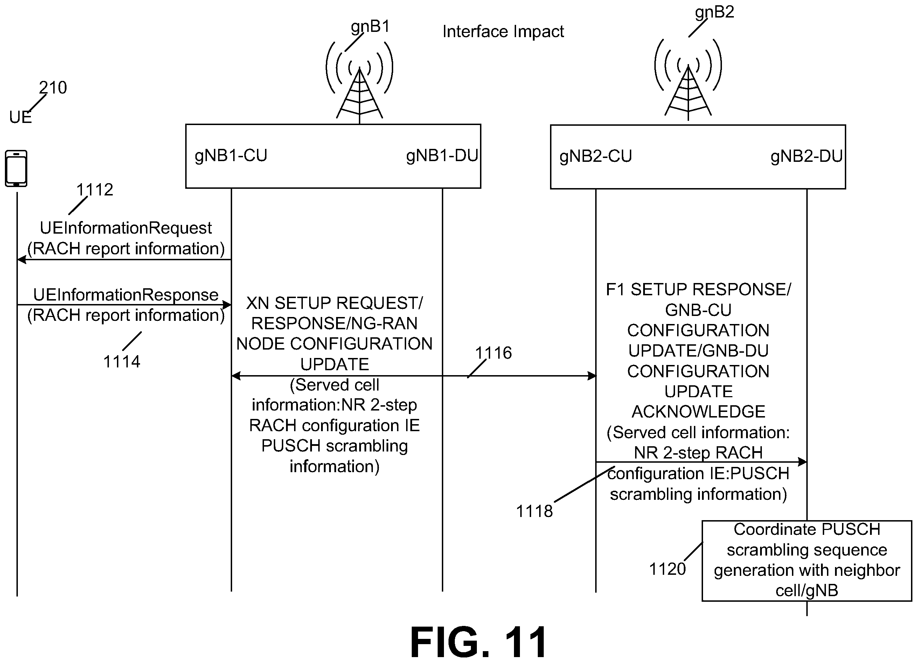

FIG. 11 is a flow chart illustrating operation of a system in which a RAN node or network node may send a neighbour node the scrambling information or scrambling identity for a Msg A PUSCH transmission by a user equipment according to an example embodiment.

At 1112 and 1114, gNB1 requests and receives from UE 210, a random access report that may indicate a cell identity, (PCI) and PUSCH scrambling identity or PUSCH scrambling information for the UE (e.g., scrambling identity that is used to scramble Msg A PUSCH transmission by UE 210). This information may indicate that a scrambling sequence for the gNB1 (e.g., for UE PUSCH transmission for Msg A) is based on either a PCI, or a transmitted scrambling identity, e.g., which may be broadcasted or signalled by the gNB1.

At 1116, NG-RAN node (e.g., network node or gNB) gNB1 can send to its neighbour gNBs (e.g., to gNB2) over the Xn interface, the PUSCH scrambling information details (cell ID (PCI), dataScramblingIdentityPUSCH or msgA-dataScramblingIndex) of its cells.

Thus, at 1116, this information can be sent, from gNB1-CU to gNB2-CU, in NR Cell PRACH Configuration IE in the Served Cell Information in XN SETUP REQUEST/RESPONSE messages or in NG-RAN NODE CONFIGURATION UPDATE messages. In another alternative a new NR 2-step RACH Configuration IE can be alternatively introduced in the Served Cell information the above messages.

At 1118, this information can further be sent from a gNB1-CU to each gNB-DU (e.g., to gnB2-DU) it hosts through F1 interface: This information can be sent NR PRACH Configuration IE in neighbour Cell Information in F1 SETUP RESPONSE, GNB-CU CONFIGURATION UPDATE and GNB-DU CONFIGURATION UPDATE ACKNOWLEDGE messages. Similarly, to the Xn interface case, a new 2-step RACH Configuration IE can be alternatively introduced in neighbour Cell Information IE.

At 1120, when network node (e.g., gNB2-DU) receives NR UE RACH Report information from the UEs on the scrambling information or when the network receives this information through Xn/F1 interfaces, the network node (e.g., gNB2-DU) may use it to readjust its parameters, e.g., the used scrambling identity to generate Msg A PUSCH in order to control and avoid PUSCH scrambling collisions or the transmission power used by the UE, and/or to coordinate PUSCH preambles used by other/neighbour cells, e.g., to avoid Msg A PUSCH transmission collisions between UEs.

Therefore, a gNB may send to its neighbour gNBs scrambling information on how the gNB calculates the scrambling identity for UL data transmission (e.g., for PUSCH transmission), as either calculated based on cell ID (physical cell identity) or based on the transmitted (e.g., broadcasted or signalled) scrambling identity value(s). Optionally, it can be assumed that the default operation is calculating a scrambling identity for PUSCH transmission is based on PCI, and usage of the transmitted scrambling identity values is enabled on demand by the gNB. The gNB may also indicate to a neighbour gNB timing information that indicates a time and/or a duration for which these transmitted (e.g., broadcasted or signalled) scrambling identity values are used.

Thus, a NG-RAN node or network node or gNB may send to its neighbours over the Xn interface PUSCH scrambling information details (cell ID (PCI), dataScramblingIdentityPUSCH or msgA-dataScramblingIndex, whichever is the basis for calculating the PUSCH scrambling sequence).

This information can be sent in NR Cell PRACH Configuration IE in the Served Cell Information in XN SETUP REQUEST/RESPONSE messages or in NG-RAN NODE CONFIGURATION UPDATE messages.

In another alternative a new NR 2-step RACH Configuration IE can be alternatively introduced in the Served Cell information the above messages, which may communicate the scrambling information. This information can further be sent from a gNB-CU to each gNB-DU it hosts through F1 interface:

This information can be sent NR PRACH Configuration IE in neighbour Cell Infomation in F1 SETUP RESPONSE, GNB-CU CONFIGURATION UPDATE and GNB-DU CONFIGURATION UPDATE ACKNOWLEDGE messages.

Similarly to the Xn interface case, a new 2-step RACH Configuration IE can be alternatively introduced in neighbour Cell Information IE.

Sending of scrambling identity information over the interfaces can be sent autonomously by a gNB or upon a trigger (e.g., in response to reception of a RACH Report).

A gNB may inform its neighbours every time it changes the method (or the type of scrambling identity - either a PCI, or a transmitted scrambling identity, that will be used for nID) it uses for initializing the PUSCH scrambling sequence generator. A gNB can be assumed to operate on a default behaviour, captured for example by using PCI as the default method of initializing PUSCH scrambling sequence. In this case, a gNB when Xn interface is setup does not need to inform its neighbours regarding which method it uses; a neighbour can guess that it is a PCI-based method. In case a default behaviour is assumed, a gNB only needs to inform its neighbours when it switches to a different method e.g., to a method configured by the gNB on its cells. The gNB can inform its neighbours for such a change by sending the new scrambling method in the served cell information in the NG-RAN NODE CONFIGURATION UPDATE messages. In one option, a gNB can further indicate to its neighbours the exact value of e.g., the msgA-DataScramblingIndex it configures over its cells.

In one alternative, it cannot be assumed that a gNB has a default behaviour. In such a case, the gNB will always indicate to its neighbours in the served cell information of XN SETUP REQUEST/RESPONSE messages or in NG-RAN NODE CONFIGURATION UPDATE messages which scrambling method it uses (cell identity/PCI based or based on the configured methods). In one option, a gNB can further indicate to its neighbours the exact value of e.g., the msgA-DataScramblingIndex it configures over its cells.

In case of split architectures, a gNB-CU may inform its gNB-DUs about the used scrambling method. Such information can be sent in the F1 SETUP RESPONSE, GNB-CU CONFIGURATION UPDATE and GNB-DU CONFIGURATION UPDATE ACKNOWLEDGE messages (e.g., in neighbour cell information element (IE)). In one option, a gNB-CU can further indicate to its gNB-DUs the exact value of e.g., the msgA-DataScramblingIndex it configures over its cells. Signaling can also be reduced in case a default behavior can be assumed. In this case a gNB-CU sends to its gNB-DUs a message to indicate only changes in the method used to initialize the scrambling sequence indicator when it is different from default PCI. Otherwise, the method for initializing the scrambling sequence indicator must be included every time in the F1 SETUP RESPONSE, GNB-CU CONFIGURATION UPDATE and GNB-DU CONFIGURATION UPDATE ACKNOWLEDGE messages. In this case also, a gNB-CU can indicate to its gNB-DUs the exact value of e.g., the msgA-DataScramblingIndex it configures.

If Msg A scrambling sequence generator is initialized by using the PCI, then it is true that neighbouring transmissions using the same time and frequency resources will not interfere with each other. However, if a gNB initializes its scrambling sequence generator to msgA-DataScramblingIndex and another gNB according to the PCI, then those two NR cells transmitting on common time and frequency resources in PUSCH may collide. The same would apply in case both NR cells use the approach of initializing the scrambling sequence generators for MsgA transmissions with msgA-DataScramblingIndex. Therefore, when the msgA-DataScramblingIndex is used to initialize the scrambling sequence generator, coordination is needed.

As one option a default operation of a gNB may be to initialize its scrambling sequence generator for MsgA PUSCH using PCI. A gNB may indicate to its neighbours if at some point in time it configures a different method of initializing a scrambling sequence generator, e.g., when it configures msgA-DataScramblingIndex. As another alternative, no default operation can be assumed and a gNB may (e.g., always) inform its neighbour network nodes or gNBs which method and which value of msgA-DataScramblingIndex it uses at a given time.

Example A: Two alternatives can be considered for the coordination of scrambling sequence generation among gNBs, namely a) a gNB has a default scrambling sequence initializing method using the PCI of its NR cells and it only informs its neighbours if it configures a different method or b) no default method is considered and a gNB must always indicate the method it uses to initialize the scrambling sequence over its cells.

Example B: A gNB informs its neighbours through Xn interface signaling which method it uses to initialize its scrambling sequence generator, namely whether it uses the PCI of its NR cells or whether it configures msgA-DataScramblingIndex. In case of using msgA-DataScramblingIndex, the index is also provided.

Example C: Scrambling sequence generation information, namely whether a gNB uses the PCI of its NR cells or whether it configures msgA-DataScramblingIndex, is also sent from a gNB-CU to a gNB-DU over the F1 interface. In case of using msgA-DataScramblingIndex, the index is also provided over the F1 interface.

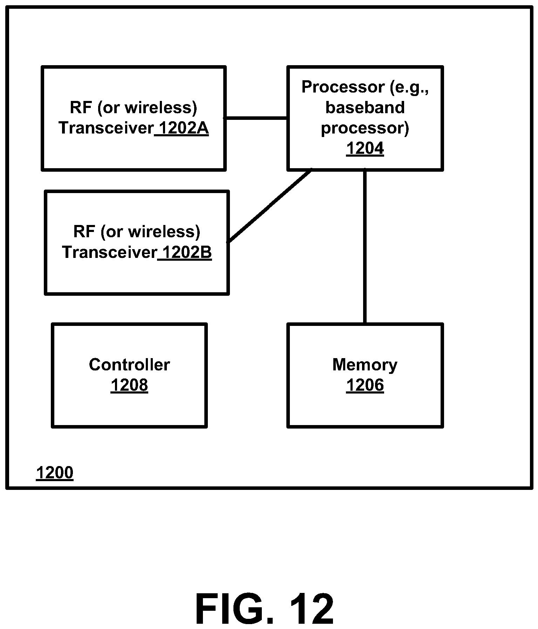

FIG. 12 is a block diagram of a network node (e.g., AP, BS, eNB, gNB, RAN node) 1200 according to an example embodiment. The wireless station 1200 may include, for example, one or more (e.g., two as shown in FIG. 12) RF (radio frequency) or wireless transceivers 1202A, 1202B, where each wireless transceiver includes a transmitter to transmit signals and a receiver to receive signals. The wireless station also includes a processor or control unit/entity (controller) 1204 to execute instructions or software and control transmission and receptions of signals, and a memory 1206 to store data and/or instructions.

Processor 1204 may also make decisions or determinations, generate frames, packets or messages for transmission, decode received frames or messages for further processing, and other tasks or functions described herein. Processor 1204, which may be a baseband processor, for example, may generate messages, packets, frames or other signals for transmission via wireless transceiver 1202 (1202A or 1202B). Processor 1204 may control transmission of signals or messages over a wireless network, and may control the reception of signals or messages, etc., via a wireless network (e.g., after being down-converted by wireless transceiver 1202, for example). Processor 1204 may be programmable and capable of executing software or other instructions stored in memory or on other computer media to perform the various tasks and functions described above, such as one or more of the tasks or methods described above. Processor 1204 may be (or may include), for example, hardware, programmable logic, a programmable processor that executes software or firmware, and/or any combination of these. Using other terminology, processor 1204 and transceiver 1202 together may be considered as a wireless transmitter/receiver system, for example.

In addition, referring to FIG. 12, a controller (or processor) 1208 may execute software and instructions, and may provide overall control for the station 1200, and may provide control for other systems not shown in FIG. 12, such as controlling input/output devices (e.g., display, keypad), and/or may execute software for one or more applications that may be provided on wireless station 1200, such as, for example, an email program, audio/-video applications, a word processor, a Voice over IP application, or other application or software.

In addition, a storage medium may be provided that includes stored instructions, which when executed by a controller or processor may result in the processor 1204, or other controller or processor, performing one or more of the functions or tasks described above.

According to another example embodiment, RF or wireless transceiver(s) 1202A/1202B may receive signals or data and/or transmit or send signals or data. Processor 1204 (and possibly transceivers 1202A/1202B) may control the RF or wireless transceiver 1202A or 1202B to receive, send, broadcast or transmit signals or data.

Embodiments of the various techniques described herein may be implemented in digital electronic circuitry, or in computer hardware, firmware, software, or in combinations of them. Embodiments may be implemented as a computer program product, i.e., a computer program tangibly embodied in an information carrier, e.g., in a machine-readable storage device or in a propagated signal, for execution by, or to control the operation of, a data processing apparatus, e.g., a programmable processor, a computer, or multiple computers. Embodiments may also be provided on a computer readable medium or computer readable storage medium, which may be a non-transitory medium. Embodiments of the various techniques may also include embodiments provided via transitory signals or media, and/or programs and/or software embodiments that are downloadable via the Internet or other network(s), either wired networks and/or wireless networks. In addition, embodiments may be provided via machine type communications (MTC), and also via an Internet of Things (IOT).

The computer program may be in source code form, object code form, or in some intermediate form, and it may be stored in some sort of carrier, distribution medium, or computer readable medium, which may be any entity or device capable of carrying the program. Such carriers include a record medium, computer memory, read-only memory, photoelectrical and/or electrical carrier signal, telecommunications signal, and software distribution package, for example. Depending on the processing power needed, the computer program may be executed in a single electronic digital computer or it may be distributed amongst a number of computers.

Furthermore, embodiments of the various techniques described herein may use a cyber-physical system (CPS) (a system of collaborating computational elements controlling physical entities). CPS may enable the embodiment and exploitation of massive amounts of interconnected ICT devices (sensors, actuators, processors microcontrollers,...) embedded in physical objects at different locations. Mobile cyber physical systems, in which the physical system in question has inherent mobility, are a subcategory of cyber-physical systems. Examples of mobile physical systems include mobile robotics and electronics transported by humans or animals. The rise in popularity of smartphones has increased interest in the area of mobile cyber-physical systems. Therefore, various embodiments of techniques described herein may be provided via one or more of these technologies.

A computer program, such as the computer program(s) described above, can be written in any form of programming language, including compiled or interpreted languages, and can be deployed in any form, including as a stand-alone program or as a module, component, subroutine, or other unit or part of it suitable for use in a computing environment. A computer program can be deployed to be executed on one computer or on multiple computers at one site or distributed across multiple sites and interconnected by a communication network.

Method steps may be performed by one or more programmable processors executing a computer program or computer program portions to perform functions by operating on input data and generating output. Method steps also may be performed by, and an apparatus may be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer, chip or chipset. Generally, a processor will receive instructions and data from a read-only memory or a random access memory or both. Elements of a computer may include at least one processor for executing instructions and one or more memory devices for storing instructions and data. Generally, a computer also may include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory may be supplemented by, or incorporated in, special purpose logic circuitry.

To provide for interaction with a user, embodiments may be implemented on a computer having a display device, e.g., a cathode ray tube (CRT) or liquid crystal display (LCD) monitor, for displaying information to the user and a user interface, such as a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

Embodiments may be implemented in a computing system that includes a back-end component, e.g., as a data server, or that includes a middleware component, e.g., an application server, or that includes a front-end component, e.g., a client computer having a graphical user interface or a Web browser through which a user can interact with an embodiment, or any combination of such back-end, middleware, or front-end components. Components may be interconnected by any form or medium of digital data communication, e.g., a communication network. Examples of communication networks include a local area network (LAN) and a wide area network (WAN), e.g., the Internet.

**Claims**

**1.** An apparatus (210) comprising:

means for classifying random access procedures of the apparatus (210) into either a first category of random access procedures that are initiated with a 2-step random access attempt, or a second category of random access procedures that are initiated with a 4-step random access attempt;

means for receiving, from a network node (212), a random access report configuration indicating at least a quantity limitation for logging random access information in a random access report for random access procedures of at least one of the first category of random access procedures or the second category of random access procedures; and

means for logging random access information in the random access report for one or more random access procedures of at least one of the first category or the second category, in accordance with the random access report configuration.

**2.** The apparatus (210) of claim 1, wherein the quantity limitation indicated by the random access report configuration indicates at least one of:

a minimum number of random access procedures of the first category or the second category for which resources are reserved in the random access report; or
a maximum number of random access procedures of the first category or the second category for which resources can be allocated in the random access report.

**3.** The apparatus (210) of claim 1 or 2, wherein the classifying comprises:
classifying random access procedures of the apparatus (210) that include at least one failed random access attempt into either a first category of random access procedures that are initiated with a 2-step random access attempt, or a second category of random access procedures that are initiated with a 4-step random access attempt.

**4.** The apparatus (210) of any of claims 1-3, further comprising:

means for receiving, from the network node (212), a request for the random access report; and
means for transmitting, to the network node (212), and in response to receiving the request, the random access report.

**5.** The apparatus (210) of claim 1, wherein the quantity limitation indicated by the random access report configuration indicates at least a maximum number of random access procedures of the first category for which resources can be allocated in the random access report,
and wherein the apparatus (210) further comprises:

means for determining that random access information for the maximum number of random access procedures of the first category have been logged in the random access report; and means for transmitting, to the network node (212), a notification that random access information for the maximum number of random access procedures of the first category have been logged in the random access report.

6. The apparatus (210) of claim 1, wherein the quantity limitation indicated by the random access report configuration indicates at least a maximum number of random access procedures of the second category for which resources can be allocated in the random access report,
and wherein the apparatus (210) further comprises:

means for determining that random access information for the maximum number of random access procedures of the second category have been logged in the random access report; and means for transmitting, to the network node (212), a notification that random access information for the maximum number of random access procedures of the second category have been logged in the random access report.

7. The apparatus (210) of any of claims 1-6, further comprising:

means for determining a maximum total number of random access procedures for which random access information may be logged in the random access report, wherein the maximum total number of random access procedures includes both the first category of random access procedures and the second category of random access procedures;
means for determining that random access information for the maximum number of random access procedures have been logged in the random access report; and
means for transmitting, to the network node, a notification that random access information for the maximum number of random access procedures have been logged in the random access report.

8. The apparatus (210) of any of claims 1-7, wherein the quantity limitation indicated by the random access report configuration indicates at least a minimum number of random access procedures of the first category for which resources are to be reserved in the random access report,
and wherein the apparatus (210) further comprises:

means for determining that random access information for the minimum number of random access procedures of the first category have been logged in the random access report; and means for transmitting, to the network node (212), a notification that random access information for the minimum number of random access procedures of the first category have been logged in the random access report.

9. The apparatus (210) of any of claims 1-8, wherein the quantity limitation indicated by the random access report configuration indicates at least a minimum number of random access procedures of the second category for which resources are to be reserved in the random access report,
and wherein the apparatus (210) further comprises:

means for determining that random access information for the minimum number of random access procedures of the second category have been logged in the random access report; and means for transmitting, to the network node (212), a notification that random access information for the minimum number of random access procedures of the second category have been logged in the random access report.

10. The apparatus (210) of any of claims 1-9, further comprising:

means for transmitting a last attempted Msg A of a 2-step random access procedure; and means for receiving, from the network node (212), a fallback random access response indicating that the apparatus should perform a fallback from a 2-step random access procedure to a 4-step random access procedure, or for determining that a maximum number of Msg A transmissions have been reached indicating that the apparatus should perform switching from a 2-step random access procedure to a 4-step random access procedure,
wherein the logging comprises logging information related to a fallback or switching of the 2-step random access procedure to a 4-step random access procedure.

11. The apparatus (210) of claim 10, wherein the logging information related to a fallback or switching of the 2-step random access procedure to a 4-step random access procedure comprises logging one or more of the following parameters related to the last attempted Msg A transmission of the 2-step random access procedure before performing a fallback or switching from the 2-step random access procedure to the 4-step random access procedure:

a Msg A preamble transmission power used for the last attempted Msg A transmission;

a Msg A physical uplink shared channel, PUSCH, data transmission power used for the last attempted Msg A transmission;

a Msg A preamble identifier, preamble ID, used for the last attempted Msg A transmission;

a Msg A PUSCH data scrambling information used for the last attempted Msg A transmission;

a random access procedure, RACH, occasion or resources that were used for RACH preamble transmission for the last attempted Msg A transmission of the 2-step random access procedure; or

a PUSCH occasion or resources that were used for PUSCH data transmission for the last attempted Msg A transmission of the 2-step random access procedure.

12. An apparatus (212) comprising:

means for transmitting, to a user equipment (210), a random access report configuration indicating one or more parameters of random access information to be logged by the user equipment (210) in a random access report for at least one of a first category of random access procedures or a second category of random access procedures, wherein the first category of random access procedures are initiated with a 2-step random access attempt by the user equipment (210), and the second category of random access procedures are initiated with a 4-step random access attempt by the user equipment (210), wherein the random access report configuration also indicates at least a quantity limitation for logging, by the user equipment (210), of random access information in the random access report for random access procedures of at least one of the first category of random access procedures or the second category of random access procedures; and

means for receiving, from the user equipment (210), a random access report based on the random access report configuration.

13. The apparatus (212) of claim 12, wherein the quantity limitation indicated by the random access report configuration indicates at least one of:

a minimum number of random access procedures of the first category or the second category for which resources are to be reserved by the user equipment (210) in the random access report; or

a maximum number of random access procedures of the first category or the second category for which resources can be allocated by the user equipment (210) in the random access report.

14. A method comprising:

classifying (410), by a user equipment (210), random access procedures of the user equipment (210) into either a first category of random access procedures that are initiated with a 2-step random access attempt, or a second category of random access procedures that are initiated with a 4-step random access attempt;

receiving (420), by the user equipment (210) from a network node (212), a random access report configuration indicating at least a quantity limitation for logging random access information in a random access report for random access procedures of at least one of the first category of random access procedures or the second category of random access procedures; and

logging (430), by the user equipment (210), random access information in the random access report for one or more random access procedures of at least one of the first category or the second category, in accordance with the random access report configuration.

15. A method comprising:

transmitting (510), by a network node (212) to a user equipment (210), a random access report configuration indicating one or more parameters of random access information to be logged by the user equipment (210) in a random access report for at least one of a first category of random access procedures or a second category of random access procedures, wherein (520) the first category of random access procedures are initiated with a 2-step random access attempt by the user equipment (210), and the second category of random access procedures are initiated with a 4-step random access attempt by the user equipment (210), wherein the random access report configuration also indicates at least a quantity limitation for logging, by the user equipment (210), of random access information in the random access report for random access procedures of at least one of the first category of random access procedures or the second category of random access procedures; and

receiving (530), by the network node (212) from the user equipment (210), a random access report based on the random access report configuration.

**Patentansprüche**

1. Vorrichtung (210), die Folgendes umfasst:

   Mittel zum Klassifizieren von Direktzugriffsprozeduren der Vorrichtung (210) entweder in eine erste Kategorie von Direktzugriffsprozeduren, die mit einem 2-stufigen Direktzugriffsversuch initiiert werden, oder eine zweite Kategorie von Direktzugriffsprozeduren die mit einem 4-stufigen Direktzugriffsversuch initiiert werden;
   Mittel zum Empfangen einer Direktzugriffsberichtsauslegung von einem Netzwerkknoten (212), die mindestens eine Mengenbegrenzung zum Protokollieren von Direktzugriffsinformationen in einem Direktzugriffsbericht für Direktzugriffsprozeduren von mindestens einer der ersten Kategorie von Direktzugriffsprozeduren oder der zweiten Kategorie von Direktzugriffsprozeduren; und
   Mittel zum Protokollieren von Direktzugriffsinformationen im Direktzugriffsbericht für eine oder mehrere Direktzugriffsprozeduren von mindestens einer der ersten Kategorie oder der zweiten Kategorie gemäß der Direktzugriffsberichtsauslegung.

2. Vorrichtung (210) nach Anspruch 1, wobei die Mengenbegrenzung, die von der Direktzugriffsberichtsauslegung angezeigt wird, mindestens eines von Folgendem anzeigt:

   eine Mindestanzahl von Direktzugriffsprozeduren der ersten Kategorie oder der zweiten Kategorie, für die im Direktzugriffsbericht Ressourcen reserviert sind; oder
   eine Höchstanzahl von Direktzugriffsprozeduren der ersten Kategorie oder der zweiten Kategorie, für die im Direktzugriffsbericht Ressourcen zugeteilt werden können.

3. Vorrichtung (210) nach Anspruch 1 oder 2, wobei das Klassifizieren Folgendes umfasst:
   Klassifizieren von Direktzugriffsprozeduren der Vorrichtung (210), die mindestens einen gescheiterten Direktzugriffsversuch beinhalten, entweder in eine erste Kategorie von Direktzugriffsprozeduren, die mit einem 2-stufigen Direktzugriffsversuch initiiert werden, oder eine zweite Kategorie von Direktzugriffsprozeduren, die mit einem 4-stufigen Direktzugriffsversuch initiiert werden.

4. Vorrichtung (210) nach einem der Ansprüche 1 bis 3, die ferner Folgendes umfasst:

   Mittel zum Empfangen einer Anforderung des Direktzugriffsberichts vom Netzwerkknoten (212); und

   Mittel zum Übertragen des Direktzugriffsberichts zum Netzwerkknoten (212) in Reaktion auf das Empfangen der Anforderung.

5. Vorrichtung (210) nach Anspruch 1, wobei die Mengenbegrenzung, die von der Direktzugriffsberichtsauslegung angezeigt wird, mindestens eine Höchstanzahl von Direktzugriffsprozeduren der ersten Kategorie anzeigen, für die Ressourcen im Direktzugriffsbericht zugeteilt werden können,
   und wobei die Vorrichtung (210) ferner Folgendes umfasst:

   Mittel zum Bestimmen, dass Direktzugriffsinformationen für die Höchstanzahl von Direktzugriffsprozeduren der ersten Kategorie im Direktzugriffsbericht protokolliert wurden; und
   Mittel zum Übertragen einer Benachrichtigung zum Netzwerkknoten (212), dass Direktzugriffsinformationen für die Höchstanzahl von Direktzugriffsprozeduren der ersten Kategorie im Direktzugriffsbericht protokolliert wurden.

6. Vorrichtung (210) nach Anspruch 1, wobei die Mengenbegrenzung, die von der Direktzugriffsberichtsauslegung angezeigt wird, mindestens eine Höchstanzahl von Direktzugriffsprozeduren der zweiten Kategorie anzeigt, für die Ressourcen im Direktzugriffsbericht zugeteilt werden können,
   und wobei die Vorrichtung (210) ferner Folgendes umfasst:

   Mittel zum Bestimmen, dass Direktzugriffsinformationen für die Höchstanzahl von Direktzugriffsprozeduren der zweiten Kategorie im Direktzugriffsbericht protokolliert wurden; und
   Mittel zum Übertragen einer Benachrichtigung zum Netzwerkknoten (212), dass Direktzugriffsinformationen für die Höchstanzahl von Direktzugriffsprozeduren der zweiten Kategorie im Direktzugriffsbericht protokolliert wurden.

7. Vorrichtung (210) nach einem der Ansprüche 1 bis 6, die ferner Folgendes umfasst:

   Mittel zum Bestimmen einer maximalen Gesamtanzahl von Direktzugriffsprozeduren, für die Direktzugriffsinformationen im Direktzugriffsbericht protokolliert werden können, wobei die maximale Gesamtanzahl von Direktzugriffsprozeduren sowohl die erste Kategorie von Direktzugriffsprozeduren als auch die zweite Kategorie von Direktzugriffsprozeduren beinhaltet;
   Mittel zum Bestimmen, dass Direktzugriffsinformationen für die Höchstanzahl von Direktzugriffsprozeduren im Direktzugriffsbericht protokolliert wurden; und

Mittel zum Übertragen einer Benachrichtigung zum Netzwerkknoten, dass Direktzugriffsinformationen für die Höchstanzahl von Direktzugriffsprozeduren im Direktzugriffsbericht protokolliert wurden.

8. Vorrichtung (210) einem der Ansprüche 1 bis 7, wobei die Mengenbegrenzung, die von der Direktzugriffsberichtsauslegung angezeigt wird, mindestens eine Mindestanzahl von Direktzugriffsprozeduren der ersten Kategorie anzeigt, für die Ressourcen im Direktzugriffsbericht reserviert sind, und wobei die Vorrichtung (210) ferner Folgendes umfasst:

Mittel zum Bestimmen, dass Direktzugriffsinformationen für die Mindestanzahl von Direktzugriffsprozeduren der ersten Kategorie im Direktzugriffsbericht protokolliert wurden; und
Mittel zum Übertragen einer Benachrichtigung zum Netzwerkknoten (212), dass Direktzugriffsinformationen für die Mindestanzahl von Direktzugriffsprozeduren der ersten Kategorie im Direktzugriffsbericht protokolliert wurden.

9. Vorrichtung (210) nach einem der Ansprüche 1 bis 8, wobei die Mengenbegrenzung, die von der Direktzugriffsberichtsauslegung angezeigt wird, mindestens eine Mindestanzahl von Direktzugriffsprozeduren der zweiten Kategorie anzeigt, für die Ressourcen im Direktzugriffsbericht reserviert sind, und wobei die Vorrichtung (210) ferner Folgendes umfasst:

Mittel zum Bestimmen, dass Direktzugriffsinformationen für die Mindestanzahl von Direktzugriffsprozeduren der zweiten Kategorie im Direktzugriffsbericht protokolliert wurden; und
Mittel zum Übertragen einer Benachrichtigung zum Netzwerkknoten (212), dass Direktzugriffsinformationen für die Mindestanzahl von Direktzugriffsprozeduren der zweiten Kategorie im Direktzugriffsbericht protokolliert wurden.

10. Vorrichtung (210) nach einem der Ansprüche 1 bis 9, die ferner Folgendes umfasst:

Mittel zum Übertragen einer zuletzt versuchten Msg A einer 2-stufigen Direktzugriffsprozedur; und
Mittel zum Empfangen einer Direktzugriffsfallbackantwort vom Netzwerkknoten (212), die anzeigt, dass die Vorrichtung einen Fallback von einer 2-stufigen Direktzugriffsprozedur auf eine 4-stufige Direktzugriffsprozedur durchführen sollte, oder zum Bestimmen, dass eine Höchstanzahl von Msg-A-Übertragungen erreicht wurden, die anzeigt, dass die Vorrichtung ein Umschalten von einer 2-stufigen Direktzugriffsprozedur auf eine 4-stufige Direktzugriffsprozedur durchführen sollte, wobei das Protokollieren das Protokollieren von Informationen umfasst, die sich auf einen Fallback oder ein Umschalten der 2-stufigen Direktzugriffsprozedur auf eine 4-stufige Direktzugriffsprozedur beziehen.

11. Vorrichtung (210) nach Anspruch 10, wobei das Protokollieren von Informationen, die sich auf einen Fallback oder ein Umschalten der 2-stufigen Direktzugriffsprozedur auf eine 4-stufige Direktzugriffsprozedur beziehen, das Protokollieren von einem oder mehreren der folgenden Parameter umfasst, die sich auf die zuletzt versuchte Msg-A-Übertragung der 2-stufigen Direktzugriffsprozedur vor dem Durchführen eines Fallback oder einem Umschalten von der 2-stufigen Direktzugriffsprozedur auf die 4-stufige Direktzugriffsprozedur beziehen:

eine Msg-A-Präambelübertragungsleistung, die für die zuletzt versuchte Msg-A-Übertragung verwendet wurde;
eine Msg-A-Datenübertragungsleistung auf einem gemeinsam verwendeten physischen Uplinkkanal, PUSCH, die für die zuletzt versuchte Msg-A-Übertragung verwendet wurde;
eine Msg-A-Präambelkennung, Präambel-ID, die für die zuletzt versuchte Msg-A-Übertragung verwendet wurde;
Msg-A-PUSCH-Datenscramblinginformationen, die für die zuletzt versuchte Msg-A-Übertragung verwendet wurden;
eine Direktzugriffsprozedur(RACH)-Gelegenheit, oder Ressourcen, die für eine RACH-Präambelübertragung für die zuletzt versuchte Msg-A-Übertragung der 2-stufigen Direktzugriffsprozedur verwendet wurden; oder
eine PUSCH-Gelegenheit oder Ressourcen, die für eine PUSCH-Datenübertragung für die zuletzt versuchte Msg-A-Übertragung der 2-stufigen Direktzugriffsprozedur verwendet wurden.

12. Vorrichtung (212), die Folgendes umfasst:

Mittel zum Übertragen einer Direktzugriffsberichtsauslegung zu einer Teilnehmereinrichtung (210), die einen oder mehrere Parameter von Direktzugriffsinformationen anzeigt, die von der Teilnehmereinrichtung (210) in einem Direktzugriffsbericht für mindestens eine einer ersten Kategorie von Direktzugriffsprozeduren oder einer zweiten Kategorie von Direktzugriffsprozeduren zu protokollieren sind, wobei die erste Kategorie von Direktzugriffsprozeduren in einem 2-stufigen Direktzugriffsversuch von der Teilnehmereinrichtung (210) initiiert werden, und die zweite Kategorie von Direktzugriffsprozeduren in einem 4-stufigen Direktzugriffsversuch durch die Teilnehmereinrichtung (210) initiiert werden, wobei die Direktzugriffsberichtsauslegung auch mindestens eine Mengenbegrenzung für das Protokollieren von Direktzugriffsinformationen durch die Teilnehmereinrichtung (210) im Direktzugriffsbericht für Direktzugriffsprozeduren von mindestens einer der ersten Kategorie von Direktzugriffsprozeduren oder der zweiten Kategorie von Direktzugriffsprozeduren anzeigt; und

Mittel zum Empfangen eines Direktzugriffsberichts von der Teilnehmereinrichtung (210) auf Basis der Direktzugriffsberichtsauslegung.

13. Vorrichtung (212) nach Anspruch 12, wobei die Mengenbegrenzung, die von der Direktzugriffsberichtsauslegung angezeigt wird, mindestens eines von Folgendem anzeigt:

eine Mindestanzahl von Direktzugriffsprozeduren der ersten Kategorie oder der zweiten Kategorie, für die im Direktzugriffsbericht Ressourcen von der Teilnehmereinrichtung (210) zu reservieren sind; oder
eine Höchstanzahl von Direktzugriffsprozeduren der ersten Kategorie oder der zweiten Kategorie, für die im Direktzugriffsbericht Ressourcen durch die Teilnehmereinrichtung (210) zugeteilt werden können.

14. Verfahren, das Folgendes umfasst:

Klassifizieren (410) von Direktzugriffsprozeduren einer Teilnehmereinrichtung (210) entweder in eine erste Kategorie von Direktzugriffsprozeduren, die mit einem 2-stufigen Direktzugriffsversuch initiiert werden, oder eine zweite Kategorie von Direktzugriffsprozeduren, die mit einem 4-stufigen Direktzugriffsversuch initiiert werden, durch die Teilnehmereinrichtung (210);
Empfangen (420) einer Direktzugriffsberichtsauslegung durch die Teilnehmereinrichtung (210) von einem Netzwerkknoten (212), die mindestens eine Mengenbegrenzung zum Protokollieren von Direktzugriffsinformationen in einem Direktzugriffsbericht für Direktzugriffsprozeduren von mindestens einer der ersten Kategorie von Direktzugriffsprozeduren oder der zweiten Kategorie von Direktzugriffsprozeduren anzeigt, und
Protokollieren (430) von Direktzugriffsinformationen durch die Teilnehmereinrichtung (210) im Direktzugriffsbericht für eine oder mehrere Direktzugriffsprozeduren von mindestens einer der ersten Kategorie oder der zweiten Kategorie gemäß der Direktzugriffsberichtsauslegung.

15. Verfahren, das Folgendes umfasst:

Übertragen (510) einer Direktzugriffsberichtsauslegung durch einen Netzwerkknoten (212) zu einer Teilnehmereinrichtung (210), die einen oder mehrere Parameter von Direktzugriffsinformationen anzeigt, die von der Teilnehmereinrichtung (210) in einem Direktzugriffsbericht für mindestens eine einer ersten Kategorie von Direktzugriffsprozeduren oder einer zweiten Kategorie von Direktzugriffsprozeduren zu protokollieren sind, wobei (520) die erste Kategorie von Direktzugriffsprozeduren in einem 2-stufigen Direktzugriffsversuch von der Teilnehmereinrichtung (210) initiiert werden, und die zweite Kategorie von Direktzugriffsprozeduren in einem 4-stufigen Direktzugriffsversuch durch die Teilnehmereinrichtung (210) initiiert werden, wobei die Direktzugriffsberichtsauslegung auch mindestens eine Mengenbegrenzung für das Protokollieren von Direktzugriffsinformationen durch die Teilnehmereinrichtung (210) im Direktzugriffsbericht für Direktzugriffsprozeduren von mindestens einer der ersten Kategorie von Direktzugriffsprozeduren oder der zweiten Kategorie von Direktzugriffsprozeduren anzeigt; und
Empfangen (530) eines Direktzugriffsberichts durch den Netzwerkknoten (212) von der Teilnehmereinrichtung (210) auf Basis der Direktzugriffsberichtsauslegung.

**Revendications**

1. Appareil (210) comprenant :

des moyens pour classifier des procédures d'accès aléatoire de l'appareil (210), soit dans une première catégorie de procédures d'accès aléatoire qui sont initiées par une tentative d'accès aléatoire en 2 étapes, soit dans une deuxième catégorie de procédures d'accès aléatoire qui sont initiées par une tentative d'accès aléatoire en 4 étapes ;
des moyens pour recevoir d'un nœud de réseau (212) une configuration de rapport d'accès aléatoire indiquant au moins une limitation de quantité pour enregistrer des informations d'accès aléatoire dans un rapport d'accès aléatoire pour des procédures d'accès aléatoire d'au moins une parmi la première catégorie de procédures d'accès aléatoire ou la deuxième catégorie de procédures d'accès aléatoire ; et
des moyens pour enregistrer des informations d'accès aléatoire dans le rapport d'accès aléatoire d'une ou plusieurs procédures d'accès aléatoire d'au moins une parmi la première catégorie ou la deuxième catégorie, conformément à la configuration de rapport d'accès aléatoire.

**2.** Appareil (210) selon la revendication 1, dans lequel la limitation de quantité indiquée par la configuration de rapport d'accès aléatoire indique au moins un parmi :

un nombre minimal de procédures d'accès aléatoire de la première catégorie ou de la deuxième catégorie pour lesquelles des ressources sont réservées dans le rapport d'accès aléatoire ; ou un nombre maximal de procédures d'accès aléatoire de la première catégorie ou de la deuxième catégorie pour lesquelles des ressources peuvent être allouées dans le rapport d'accès aléatoire.

**3.** Appareil (210) selon la revendication 1 ou 2, dans lequel la classification comprend :
la classification de procédures d'accès aléatoire de l'appareil (210) qui comportent au moins une tentative d'accès aléatoire échouée, soit dans une première catégorie de procédures d'accès aléatoire qui sont initiées par une tentative d'accès aléatoire en 2 étapes, soit dans une deuxième catégorie de procédures d'accès aléatoire qui sont initiées par une tentative d'accès aléatoire en 4 étapes.

**4.** Appareil (210) selon l'une des revendications 1 à 3, comprenant en outre :

des moyens pour recevoir du nœud de réseau (212) une demande de rapport d'accès aléatoire ; et
des moyens pour transmettre le rapport d'accès aléatoire au nœud de réseau (212) en réponse à la réception de la demande.

**5.** Appareil (210) selon la revendication 1, dans lequel la limitation de quantité indiquée par la configuration de rapport d'accès aléatoire indique au moins un nombre maximal de procédures d'accès aléatoire de la première catégorie pour lesquelles des ressources peuvent être allouées dans le rapport d'accès aléatoire,
et dans lequel l'appareil (210) comprend en outre :

des moyens pour déterminer que des informations d'accès aléatoire pour le nombre maximal de procédures d'accès aléatoire de la première catégorie ont été enregistrées dans le rapport d'accès aléatoire ; et
des moyens pour transmettre au nœud de réseau (212) une notification selon laquelle des informations d'accès aléatoire pour le nombre maximal de procédures d'accès aléatoire de la première catégorie ont été enregistrées dans le rapport d'accès aléatoire.

**6.** Appareil (210) selon la revendication 1, dans lequel la limitation de quantité indiquée par la configuration de rapport d'accès aléatoire indique au moins un nombre maximal de procédures d'accès aléatoire de la deuxième catégorie pour lesquelles des ressources peuvent être allouées dans le rapport d'accès aléatoire,
et dans lequel l'appareil (210) comprend en outre :

des moyens pour déterminer que des informations d'accès aléatoire pour le nombre maximal de procédures d'accès aléatoire de la deuxième catégorie ont été enregistrées dans le rapport d'accès aléatoire ; et
des moyens pour transmettre au nœud de réseau (212) une notification selon laquelle des informations d'accès aléatoire pour le nombre maximal de procédures d'accès aléatoire de la deuxième catégorie ont été enregistrées dans le rapport d'accès aléatoire.

**7.** Appareil (210) selon l'une des revendications 1 à 6, comprenant en outre :

des moyens pour déterminer un nombre total maximal de procédures d'accès aléatoire pour lesquelles des informations d'accès aléatoire peuvent être enregistrées dans le rapport d'accès aléatoire, dans lequel le nombre total maximal de procédures d'accès aléatoire comporte à la fois la première catégorie de procédures d'accès aléatoire et la deuxième catégorie de procédures d'accès aléatoire ;
des moyens pour déterminer que des informations d'accès aléatoire pour le nombre maximal de procédures d'accès aléatoire ont été enregistrées dans le rapport d'accès aléatoire ; et
des moyens pour transmettre au nœud de réseau une notification selon laquelle des informations d'accès aléatoire pour le nombre maximal de procédures d'accès aléatoire ont été enregistrées dans le rapport d'accès aléatoire.

**8.** Appareil (210) selon l'une des revendications 1 à 7, dans lequel la limitation de quantité indiquée par la configuration de rapport d'accès aléatoire indique au moins un nombre minimal de procédures d'accès aléatoire de la première catégorie pour lesquelles des ressources doivent être réservées dans le rapport d'accès aléatoire,
et dans lequel l'appareil (210) comprend en outre :

des moyens pour déterminer que des informations d'accès aléatoire pour le nombre minimal de procédures d'accès aléatoire de la première catégorie ont été enregistrées dans le rapport d'accès aléatoire ; et

des moyens pour transmettre au nœud de réseau (212) une notification selon laquelle des informations d'accès aléatoire pour le nombre minimal de procédures d'accès aléatoire de la première catégorie ont été enregistrées dans le rapport d'accès aléatoire.

9. Appareil (210) selon l'une des revendications 1 à 8, dans lequel la limitation de quantité indiquée par la configuration de rapport d'accès aléatoire indique au moins un nombre minimal de procédures d'accès aléatoire de la deuxième catégorie pour lesquelles des ressources doivent être réservées dans le rapport d'accès aléatoire,

et dans lequel l'appareil (210) comprend en outre :

des moyens pour déterminer que des informations d'accès aléatoire pour le nombre minimal de procédures d'accès aléatoire de la deuxième catégorie ont été enregistrées dans le rapport d'accès aléatoire ; et

des moyens pour transmettre au nœud de réseau (212) une notification selon laquelle des informations d'accès aléatoire pour le nombre minimal de procédures d'accès aléatoire de la deuxième catégorie ont été enregistrées dans le rapport d'accès aléatoire.

10. Appareil (210) selon l'une des revendications 1 à 9, comprenant en outre :

des moyens pour transmettre un Msg A de dernière tentative d'une procédure d'accès aléatoire en 2 étapes ; et

des moyens pour recevoir du nœud de réseau (212) une réponse d'accès aléatoire de repli indiquant que l'appareil doit effectuer un repli d'une procédure d'accès aléatoire en 2 étapes vers une procédure d'accès aléatoire en 4 étapes, ou pour déterminer qu'un nombre maximal de transmissions de Msg A a été atteint, indiquant que l'appareil doit effectuer une commutation d'une procédure d'accès aléatoire en 2 étapes vers une procédure d'accès aléatoire en 4 étapes,

dans lequel l'enregistrement comprend des informations d'enregistrement relatives à un repli ou à une commutation de la procédure d'accès aléatoire en 2 étapes vers une procédure d'accès aléatoire en 4 étapes.

11. Appareil (210) selon la revendication 10, dans lequel les informations d'enregistrement relatives à un repli ou à une commutation de la procédure d'accès aléatoire en 2 étapes vers une procédure d'accès aléatoire en 4 étapes comprend l'enregistrement d'un ou plusieurs des paramètres suivants relatifs à la transmission de Msg A de dernière tentative de la procédure d'accès aléatoire en 2 étapes avant d'effectuer un repli ou de commuter de la procédure d'accès aléatoire en 2 étapes vers la procédure d'accès aléatoire en 4 étapes :

une puissance de transmission de préambule de Msg A, utilisée pour la transmission de Msg A de dernière tentative ;

une puissance de transmission de données de canal physique partagé de liaison montante, PUSCH, de Msg A, utilisée pour la transmission de Msg A de dernière tentative ;

un identifiant de préambule de Msg A, ID de préambule, utilisé pour la transmission de Msg A de dernière tentative ;

des informations de brouillage de données de PUSCH de Msg A, utilisées pour la transmission de Msg A de dernière tentative ;

une occasion ou des ressources de procédure d'accès aléatoire, RACH, qui ont été utilisées pour la transmission de préambule RACH pour la transmission de Msg A de dernière tentative de la procédure d'accès aléatoire en 2 étapes ; ou

une occasion ou des ressources PUSCH qui ont été utilisées pour la transmission de données PUSCH pour la transmission de Msg A de dernière tentative de la procédure d'accès aléatoire en 2 étapes.

12. Appareil (212) comprenant :

des moyens pour transmettre à un équipement utilisateur (210) une configuration de rapport d'accès aléatoire indiquant un ou plusieurs paramètres d'informations d'accès aléatoire à enregistrer par l'équipement utilisateur (210) dans un rapport d'accès aléatoire pour au moins une parmi une première catégorie de procédures d'accès aléatoire ou une deuxième catégorie de procédures d'accès aléatoire, dans lequel la première catégorie de procédures d'accès aléatoire est initiée par une tentative d'accès aléatoire en 2 étapes par l'équipement utilisateur (210), et la deuxième catégorie de procédures d'accès aléatoire est initiée par une tentative d'accès aléatoire en 4 étapes par l'équipement utilisateur (210), dans lequel la configuration de rapport d'accès aléatoire indique également au moins une limitation de quantité pour enregistrer, par l'équipement utilisateur (210), des informations d'accès aléatoire dans le rapport d'accès aléatoire pour des procédures d'accès aléatoire d'au moins une parmi la première catégorie de procédures d'accès aléatoire ou la deuxième catégorie de procédures d'accès

53 **EP 4 278 654 B1** 54

aléatoire ; et

des moyens pour recevoir de l'équipement utilisateur (210) un rapport d'accès aléatoire sur la base de la configuration de rapport d'accès aléatoire.

**13.** Appareil (212) selon la revendication 12, dans lequel la limitation de quantité indiquée par la configuration de rapport d'accès aléatoire indique au moins un parmi :

un nombre minimal de procédures d'accès aléatoire de la première catégorie ou de la deuxième catégorie pour lesquelles des ressources doivent être réservées par l'équipement utilisateur (210) dans le rapport d'accès aléatoire ; ou

un nombre maximal de procédures d'accès aléatoire de la première catégorie ou de la deuxième catégorie pour lesquelles des ressources peuvent être allouées par l'équipement utilisateur (210) dans le rapport d'accès aléatoire.

**14.** Procédé comprenant :

la classification (410), par un équipement utilisateur (210), de procédures d'accès aléatoire de l'équipement utilisateur (210), soit dans une première catégorie de procédures d'accès aléatoire qui sont initiées par une tentative d'accès aléatoire en 2 étapes, soit dans une deuxième catégorie de procédures d'accès aléatoire qui sont initiées par une tentative d'accès aléatoire en 4 étapes ;

la réception (420), d'un nœud de réseau (212), par l'équipement utilisateur (210), d'une configuration de rapport d'accès aléatoire indiquant au moins une limitation de quantité pour enregistrer des informations d'accès aléatoire dans un rapport d'accès aléatoire pour des procédures d'accès aléatoire d'au moins une parmi la première catégorie de procédures d'accès aléatoire ou la deuxième catégorie de procédures d'accès aléatoire ; et

l'enregistrement (430), par l'équipement utilisateur (210), d'informations d'accès aléatoire dans le rapport d'accès aléatoire d'une ou plusieurs procédures d'accès aléatoire d'au moins une parmi la première catégorie ou la deuxième catégorie, conformément à la configuration de rapport d'accès aléatoire.

**15.** Procédé comprenant :

la transmission (510), par un nœud de réseau (212), à un équipement utilisateur (210), d'une configuration de rapport d'accès aléatoire indiquant un ou plusieurs paramètres d'informations d'accès aléatoire à enregistrer par l'équipement utilisateur (210) dans un rapport d'accès aléatoire pour au moins une parmi une première catégorie de procédures d'accès aléatoire ou une deuxième catégorie de procédures d'accès aléatoire, dans lequel (520) la première catégorie de procédures d'accès aléatoire est initiée par une tentative d'accès aléatoire en 2 étapes par l'équipement utilisateur (210), et la deuxième catégorie de procédures d'accès aléatoire est initiée par une tentative d'accès aléatoire en 4 étapes par l'équipement utilisateur (210), dans lequel la configuration de rapport d'accès aléatoire indique également au moins une limitation de quantité pour enregistrer, par l'équipement utilisateur (210), des informations d'accès aléatoire dans le rapport d'accès aléatoire pour des procédures d'accès aléatoire d'au moins une parmi la première catégorie de procédures d'accès aléatoire ou la deuxième catégorie de procédures d'accès aléatoire ; et

la réception (530), de l'équipement utilisateur (210), par le nœud de réseau (212), d'un rapport d'accès aléatoire sur la base de la configuration de rapport d'accès aléatoire.

Example Wireless Network 130

**FIG. 1**

**FIG. 2**

FIG. 3

410

Classifying, by a user equipment, random access procedures of the user equipment into either a first category of random access procedures that are initiated with a 2-step random access attempt, or a second category of random access procedures that are initiated with a 4-step random access attempt

420

Receiving, by the user equipment from a network node, a random access report configuration indicating at least a quantity limitation for logging random access information in a random access report for random access procedures of at least one of the first category of random access procedures or the second category of random access procedures

430

Logging, by the user equipment, random access information in the random access report for one or more random access procedures of at least one of the first category or the second category, in accordance with the random access report configuration

# FIG. 4

transmitting, by a network node to a user equipment, a random access report configuration indicating one or more parameters of random access information to be logged by the user equipment in a random access report for at least one of a first category of random access procedures or a second category of random access procedures, wherein the first category of random access procedures are initiated with a 2-step random access attempt by the user equipment, and the second category of random access procedures are initiated with a 4-step random access attempt by the user equipment;

510

Wherein the random access report configuration also indicates at least a quantity limitation for logging, by the user equipment, of random access information in the random access report for random access procedures of at least one of the first category of random access procedures or the second category of random access procedures

520

Receiving, by the network node from the user equipment based on the random access report configuration, a random access report

530

# FIG. 5

Examples of Category-1 (or first category) of RACH procedures (that are initiated with a 2-step RACH attempt)

RACH procedure 612

With fall-back to 4-steps RACH

| RACH Attempt #1 | RACH Attempt #2 | RACH Attempt #3 | RACH Attempt #4 |
|---|---|---|---|
| (2-steps RACH) | (2-steps RACH) | (2-steps RACH) | (4-steps RACH) |

Without fall-back to 4-steps RACH

RACH procedure 614

| RACH Attempt #1 | RACH Attempt #2 | RACH Attempt #3 |
|---|---|---|
| (2-steps RACH) | (2-steps RACH) | (2-steps RACH) |

Example of Category-2 (or second category) of RACH procedures (that are initiated with a 4-step RACH attempt)

RACH procedure 616

| RACH Attempt #1 | RACH Attempt #2 |
|---|---|
| (4-steps RACH) | (4-steps RACH) |

▦ Unsuccessful RACH attempt

☐ Successful RACH attempt

The type of the initial or first RACH attempt will determine whether it is a category-1 or category-2 RACH procedure

# FIG. 6

720

Entry in RACH Report
for a RACH Procedure

| CGI/PCI |
| --- |
| RACH Purpose |
| ... |
| Log info for RACH attempt # 1 |
| Log info for RACH attempt # 2 |
| ... |
| |
| |

710

Random Access (RACH) Report
(RA-ReportList-r16 parameter)

712

714

| RACH procedure #1 (RA-Report-r16) |
| --- |
| RACH procedure #2 (RA-Report-r16) |
| |

$L < N$
(L - maximum number of logged entries for category-1 RACH procedures )

N
(maximum N of logged RACH procedures in RACH report; maxRAReport-r16 parameter)

.
.
.

$M < N$
(M - maximum number of logged entries for category-2 RACH procedures)

| RACH procedure #10 |
| --- |

716

$L+M>=N$

**FIG. 7**

EP 4 278 654 B1

810

RACH Report
(RA-ReportList-r16 parameter)

| | |
|---|---|
| RACH procedure #1 (RA-Report-r16) | |
| RACH procedure #2 (RA-Report-r16) | |

L < N
(minimum number of reserved/allocated logged entries for category-1 RACH procedures

812

N
(maximum N of logged RACH procedures in RACH report; maxRAReport-r16 parameter)

These entries can be used for either category-1 or category-2 RACH procedures;

M < N
(minimum number of reserved/allocated logged entries for category-2 RACH procedures; new parameter)

RACH procedure #10

L+M<=N

# FIG. 8

**FIG. 9**

EP 4 278 654 B1

**1010**

Determining, by a first network node, a physical uplink shared channel (PUSCH) scrambling sequence information indicating that a PUSCH scrambling sequence used by one or more cells of the first network node for data scrambling is based on either a cell identity or a transmitted (or configured) scrambling identity

**1020**

Sending, by the first network node to a second network node, the PUSCH scrambling sequence information indicating that a PUSCH scrambling sequence used by one or more cells of the first network node is based on either a cell identity or a transmitted (or configured) scrambling identity

# FIG. 10

**FIG. 11**

EP 4 278 654 B1

**FIG. 12**

## EP 4 278 654 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ZTE CORPORATION et al.** Enhanced UE reporting for 2step RA. *3GPP R2-2010322*, 02 November 2020